# EUROPÄISCHE PATENTSCHRIFT

(11) **EP 0 524 147 B1**
(45) Veröffentlichungstag und Bekanntmachung des Hinweises auf die Patenterteilung: **22.04.1998**
(21) Anmeldenummer: 92810526.1
(22) Anmeldetag: 10.07.1992
(51) Int. Cl.: C09B 43/32, C09B 67/22, C09B 31/10, D06P 3/24, C09B 31/147

(54) **Azofarbstoffe, Verfahren zu deren Herstellung und deren Verwendung**
Azo dyes, method for their preparation and their use
Colorants azoiques, procédé pour leur préparation et leur utilisation

(30) Priorität: 19.07.1991 CH 2161/91
(43) Veröffentlichungstag der Anmeldung: 20.01.1993
(73) Patentinhaber: Ciba Specialty Chemicals Holding Inc., 4057 Basel (CH)
(72) Erfinder: Schaetzer, Jürgen, Dr., W-7888 Rheinfelden (DE)

(56) Entgegenhaltungen:
- EP-A- 0 439 423
- DE-A- 2 209 255
- FR-A- 1 213 760
- GB-A- 2 024 265

## Beschreibung

Die vorliegende Erfindung betrifft neue Azofarbstoffe, Verfahren zu deren Herstellung und Verwendung dieser Farbstoffe zum Färben und Bedrucken von Fasermaterialien, insbesondere textilen Fasermaterialien.

Gegenstand der vorliegenden Erfindung sind Azofarbstoffe der Formel 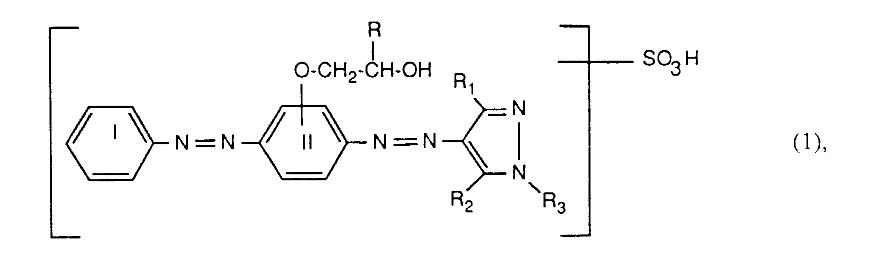 worin R, R₁ und R₂ unabhängig voneinander Wasserstoff, gegebenenfalls substituiertes C₁-C₈-Alkyl oder Phenyl sind, R₃ Wasserstoff oder gegebenenfalls substituiertes C₁-C₈-Alkyl, C₅-C₇-Cycloalkyl oder Phenyl ist und die Benzolringe I und II gegebenenfalls weitersubstituiert sind.

Die Azofarbstoffe der Formel (1), worin R₁ und R₂ voneinander verschiedene Bedeutungen haben und zusätzlich R₃ nicht Wasserstoff bedeutet, liegen in der Regel als Isomerengemisch der Verbindungen der Fomeln 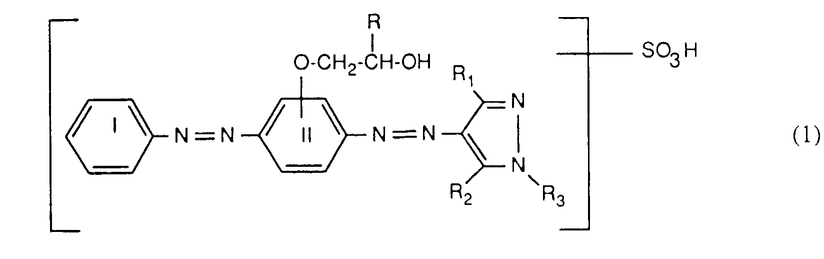 und 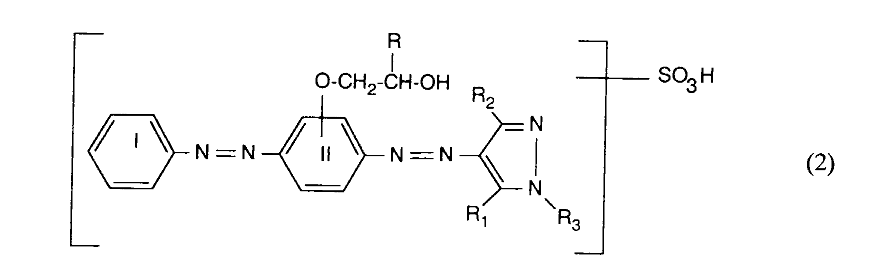 vor. Unter der Bezeichnung Azofarbstoffe der Formel (1) werden hier und im folgenden auch die oben angegebenen Isomerengemische verstanden.

Aus der DE-A-2 209 255 sind Farbstoffe bekannt, welche sich von den erfindungsgemässen Farbstoffen hinsichtlich des Substituenten der Formel -O-CH₂-CH(R)-OH unterscheiden.

Als C₁-C₈-Alkyl kommt für R, R₁, R₂ und R₃ in Formel (1) unabhängig voneinander z.B. Methyl, Aethyl, Propyl, Isopropyl, Butyl, Isobutyl, sek.-Butyl, tert.-Butyl, Pentyl, Hexyl, Heptyl oder Octyl, sowie die entsprechenden Reste, die z.B. substituiert sind durch Hydroxy, C₁-C₄-Alkoxy, Cyan oder Halogen, in Betracht. Als substituiertes C₁-C₈-Alkyl kommt für R insbesondere durch Hydroxy substituiertes C₁-C₈-Alkyl in Betracht.

Als C₅-C₇-Cycloalkyl kommt für R₃ in Formel (1) z.B. unsubstituiertes Cyclohexyl oder durch C₁-C₄-Alkyl, wie z.B. Methyl oder Aethyl, substituiertes Cyclohexyl in Betracht.

Als Phenyl kommt für R, R₁, R₂ und R₃ in Formel (1) z.B. unsubstituiertes Phenyl oder durch C₁-C₄-Alkyl, wie z.B. Methyl oder Aethyl, C₁-C₄-Alkoxy, wie z.B. Methoxy oder Aethoxy, C₂-C₄-Alkanoylamino, wie z.B. Acetylamino oder Propionylamino, Hydroxy, Sulfo oder Halogen, wie z.B. Fluor, Chlor oder Brom, substituiertes Phenyl in Betracht.

Als Substituenten der Benzolringe I und II kommen unabhängig voneinander z.B. C₁-C₄-Alkyl, wie z.B. Methyl oder Aethyl, C₁-C₄-Alkoxy, wie z.B. Methoxy oder Aethoxy, C₂-C₄-Alkanoylamino, wie z.B. Acetylamino oder Propionylamino, Hydroxy, Sulfo, Nitro, Halogen, wie z.B. Fluor, Chlor oder Brom, Sulfamoyl oder am Stickstoffatom durch C₁-C₄-Alkyl, Phenyl oder Naphthyl mono- oder disubstituiertes Sulfamoyl, welches im C₁-C₄-Alkyl-, Phenyl- und Naphthylrest durch die oben genannten Substituenten weitersubstituiert sein kann, in Betracht. Bevorzugte Substituenten der Benzolringe I und II sind C₁-C₄-Alkyl, C₁-C₄-Alkoxy, C₂-C₄-Alkanoylamino und Halogen, insbesondere Methyl, Methoxy, Acetylamino und Chlor.

Vorzugsweise enthalten die Azofarbstoffe der Formel (1) nur eine Sulfogruppe.

Bevorzugt sind Azofarbstoffe der Formel (1), worin R Wasserstoff, oder gegebenenfalls durch Hydroxy substituiertes C₁-C₄-Alkyl ist, insbesondere worin R Methyl, Hydroxymethyl oder Aethyl, vorzugsweise Methyl oder Aethyl, ist.

Weiterhin bevorzugt sind Azofarbstoffe der Formel (1), worin R₁ und R₂ unabhängig voneinander Wasserstoff, C₁-C₄-Alkyl, insbesondere Methyl oder Aethyl, oder Phenyl sind.

Ferner sind Azofarbstoffe der Formel (1) bevorzugt, worin R₃ Wasserstoff, C₁-C₄-Alkyl oder Phenyl ist.

In den Azofarbstoffen der Formel (1) ist die Sulfogruppe bevorzugt an den Benzolring I gebunden.

Besonders bevorzugt sind Azofarbstoffe der Formel (1), worin R Wasserstoff oder gegebenenfalls durch Hydroxy substituiertes C₁-C₄-Alkyl ist, R₁ und R₂ unabhängig voneinander Wasserstoff oder C₁-C₄-Alkyl sind, R₃ Wasserstoff, C₁-C₄-Alkyl oder Phenyl ist, die Benzolringe I und II unabhängig voneinander gegebenenfalls durch C₁-C₄-Alkyl, C₁-C₄-Alkoxy, C₂-C₄-Alkanoylamino oder Halogen weitersubstituiert sind und die Sulfogruppe an den Benzolring I gebunden ist.

Ganz besonders bevorzugt sind Azofarbstoffe der Formel 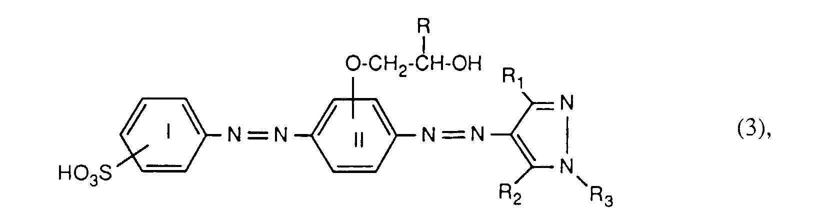 worin R Methyl oder Aethyl ist, R₁ und R₂ unabhängig voneinander Methyl oder Aethyl sind, R₃ Wasserstoff, Methyl, Aethyl oder Phenyl ist und die Benzolringe I und II unabhängig voneinander gegebenenfalls durch Methyl, Methoxy, Acetylamino oder Chlor weitersubstituiert sind.

Gegenstand der Erfindung ist ferner ein Verfahren zur Herstellung der Azofarbstoffe der Formel (1), welches dadurch gekennzeichnet ist, dass man ein Amin der Formel 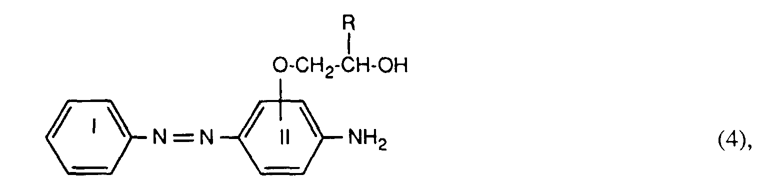 worin R die unter Formel (1) angegebenen Bedeutungen hat und die Benzolringe I und II gegebenenfalls substituiert sind, diazotiert und auf eine Kupplungskomponente der Formel 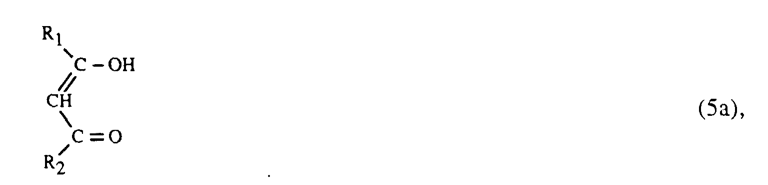 worin R₁ und R₂ unabhängig voneinander gegebenenfalls substituiertes C₁-C₈-Alkyl oder Phenyl sind,
oder auf eine Kupplungskomponente der Formel 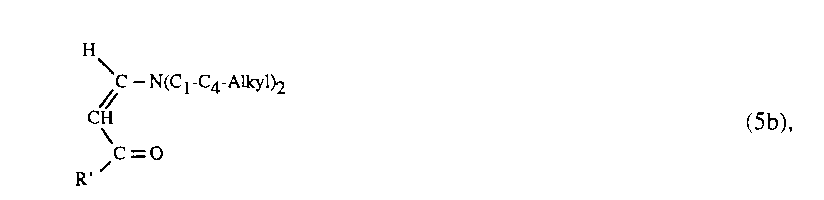 worin R' die für R₁ und R₂ unter Formel (1) angegebenen Bedeutungen hat, kuppelt und das Reaktionsprodukt der Formel 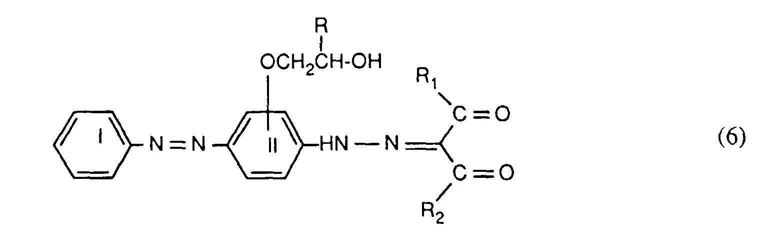 mit einem Hydrazin der Formel

H₂N-NH-R₃ (7),

worin R₃ die unter Formel (1) angegebenen Bedeutungen hat, umsetzt, wobei das Amin der Formel (4), die umgesetzte Kupplungskomponente der Formel (5a) oder (5b) und das Hydrazin der Formel (7) zusammen mindestens eine Sulfogruppe enthalten. Das Reaktionsprodukt der Formel (6) enthält somit, falls das Amin der Formel (4) oder die umgesetzte Kupplungskomponente der Formel (5a) oder (5b) eine Sulfogruppe enthält, ebenfalls eine solche Gruppe.

Die Diazotierung des Amins der Formel (4) erfolgt in der Regel durch Einwirken salpetriger Säure in wässrig-mineralsaurer Lösung bei tiefer Temperatur, die Kupplung auf die Kupplungskomponente der Formel (5a) oder (5b) bei sauren, neutralen bis schwach alkalischen pH-Werten, insbesondere bei einem pH-Wert von 2 bis 6.

Die Umsetzung der Verbindung der Formel (6) mit einem Hydrazin der Formel (7) erfolgt in Wasser, einem organischen Lösungsmittel, wie z.B. Methanol, Aethanol, Pyridin oder Eisessig, oder einer Mischung von Wasser und einem organischen Lösungsmittel, wie z.B. Wasser/Eisessig, bei einer Temperatur von 40 bis 100°C, insbesondere bei einer Temperatur von 40 bis 60°C.

Die Amine der Formel (4), die Kupplungskomponenten der Formel (5a) und (5b) und die Hydrazine der Formel (7) sind an sich bekannt oder können in Analogie zu bekannten Verbindungen hergestellt werden.

Als Beispiele für Amine der Formel (4) seien
3-(β-Hydroxypropoxy)-4-amino-azobenzol-2'-, -3'- oder -4'-sulfonsäure,
3-(β-Hydroxypropoxy)-4-amino-6-methyl-azobenzol-2'-, -3'- oder -4'-sulfonsäure,
3-(β-Hydroxypropoxy)-4-amino-6-methoxy-azobenzol-2'-, -3'- oder -4'-sulfonsäure,
3-(β-Hydroxypropoxy)-4-amino-6-acetylamino-azobenzol-2'-, -3'- oder -4'-sulfonsäure,
3-(β-Hydroxypropoxy)-4-amino-6-chloro-azobenzol-2'-, -3'- oder -4'-sulfonsäure,
3-(β-Hydroxypropoxy)-4-amino-2'-chloro-azobenzol-3'-, -4'-, -5'- oder -6'-sulfonsäure,
3-(β-Hydroxybutoxy)-4-amino-azobenzol-2'-, -3'- oder -4'-sulfonsäure,
3-(β-Hydroxybutoxy)-4-amino-6-methyl-azobenzol-2'-, -3'- oder -4'-sulfonsäure,
3-(β-Hydroxybutoxy)-4-amino-6-methoxy-azobenzol-2'-, -3'- oder -4'-sulfonsäure,
3-(β-Hydroxybutoxy)-4-amino-6-acetylamino-azobenzol-2'-, -3'- oder -4'-sulfonsäure,
3-(β-Hydroxybutoxy)-4-amino-6-chloro-azobenzol-2'-, -3'- oder -4'-sulfonsäure,
3-(β-Hydroxybutoxy)-4-amino-2'-chloro-azobenzol-3'-, -4'-, -5'- oder -6'-sulfonsäure,
genannt.

Als Beispiele für Kupplungskomponenten der Formel (5a) und (5b) seien 3-Diäthylamino-propenal-(1), 4-Diäthylamino-butenon-(2), 2,4-Pentandion, 2,4-Hexandion, 3,5-Heptandion, 2,4-Heptandion, 3,5-Oktandion, 4,6-Oktandion, Dibenzoylmethan, Formylacetophenon und Benzoylaceton genannt.

Als Beispiele für Verbindungen der Formel (7) seien Hydrazin, Methyl-, Aethyl-, Propyl-, Isopropyl-, Butyl-, Isobutyl-, sek.-Butyl-, tert.-Butyl-, Phenyl- und Cyclohexylhydrazin sowie Phenylhydrazin-4-sulfonsäure genannt.

Bevorzugte Ausführungsformen des erfindungsgsmässen Verfahrens sind dadurch gekennzeichnet, dass man
- ein Amin der Formel (4) verwendet, worin die Benzolringe I und II unabhängig voneinander gegebenenfalls durch C₁-C₄-Alkyl, C₁-C₄-Alkoxy, C₂-C₄-Alkanoylamino oder Halogen weitersubstituiert sind;
- ein Amin der Formel (4) verwendet, worin die Sulfogruppe an den Benzolring I gebunden ist;
- ein Amin der Formel (4) verwendet, worin R Wasserstoff oder gegebenenfalls durch Hydroxy substituiertes C₁-C₄-Alkyl ist, insbesondere worin R Methyl, Hydroxymethyl oder Aethyl, vorzugsweise Methyl oder Aethyl, ist;
- eine Kupplungskomponente der Formel (5a) verwendet, worin R₁ und R₂ unabhängig voneinander Phenyl oder C₁-C₄-Alkyl, insbesondere Methyl oder Aethyl, sind, oder eine Kupplungskomponente der Formel (5b) verwendet, worin R' Wasserstoff, Phenyl oder C₁-C₄-Alkyl, insbesondere Methyl oder Aethyl, ist;
- eine Verbindung der Formel (7) verwendet, worin R₃ Wasserstoff, C₁-C₄-Alkyl oder Phenyl ist;
- ein Amin der Formel (4), eine Kupplungskomponente der Formel (5a) oder (5b) und eine Verbindung der Formel (7) verwendet, welche zusammen nur eine Sulfogruppe enthalten.

Eine besonders bevorzugte Ausführungsform des erfindungsgemässen Verfahrens ist dadurch gekennzeichnet, dass man ein Amin der Formel (4), worin R Wasserstoff oder gegebenenfalls durch Hydroxy substituiertes C₁-C₄-Alkyl ist und die Benzolringe I und II unabhängig voneinander gegebenenfalls durch C₁-C₄-Alkyl, C₁-C₄-Alkoxy, C₂-C₄-Alkanoylamino oder Halogen weitersubstituiert sind und die Sulfogruppe an den Benzolring I gebunden ist, diazotiert, auf eine Kupplungskomponente der Formel (5a), worin R₁ und R₂ C₁-C₄-Alkyl sind, oder auf eine Kupplungskomponente der Formel (5b), worin R' Wasserstoff ist, kuppelt, und das erhaltene Reaktionsprodukt mit einer Verbindung der Formel (7), worin R₃ Wasserstoff, C₁-C₄-Alkyl oder Phenyl ist, umsetzt.

Eine ganz besonders bevorzugte Ausführungsform des erfindungsgemässen Verfahrens zur Herstellung der Azofarbstoffe der Formel (1) ist dadurch gekennzeichnet, dass man ein Amin der Formel 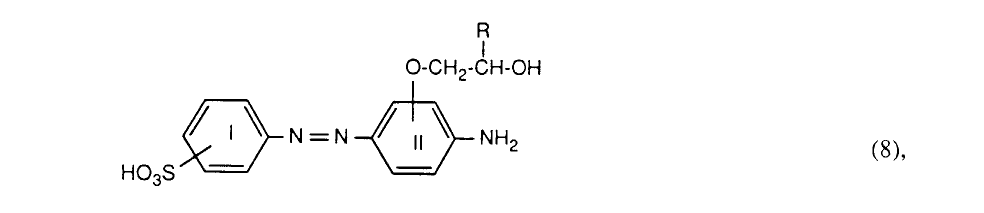 worin R die unter Formel (3) angegebenen Bedeutungen hat und die Benzolringe I und II gegebenenfalls wie unter Formel (3) angegeben substituiert sind, diazotiert, auf eine Kupplungskomponente der Formel (5a), worin R₁ und R₂ die unter Formel (3) angegebenen Bedeutungen haben, kuppelt und das erhaltene Reaktionsprodukt mit einer Verbindung der Formel (7), worin R₃ die unter Formel (3) angegebenen Bedeutungen hat, umsetzt.

Gegenstand der Erfindung ist ferner ein Verfahren zum Trichromie-Färben oder -Bedrucken von natürlichen und synthetischen Polyamidfasermaterialien mit einer Farbstoffmischung, die mindestens einen gelb- oder orangefärbenden Farbstoff der Formel (1) zusammen mit mindestens einem rotfärbenden Farbstoff und mindestens einem blaufärbenden Farbstoff enthält, wobei für den Farbstoff der Formel (1) insbesondere die zuvor angegebenen Bevorzugungen gelten; vorzugsweise verwendet man als gelb- oder orangefärbenden Farbstoff einen Farbstoff der Formel (3).

Bevorzugt verwendet man in dem erfindungsgemässen Verfahren zum Trichromie-Färben oder -Bedrucken mindestens einen Farbstoff der Formel (1) zusammen mit mindestens einem der rotfärbenden Farbstoffe der Formeln (9), (10) und (11): 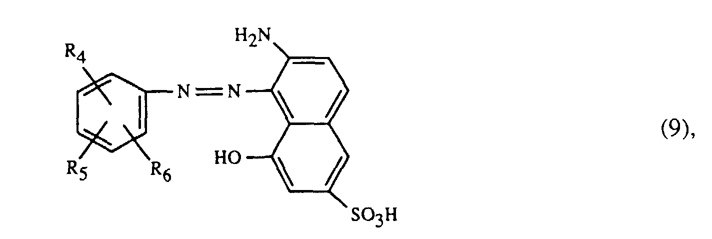 worin R₄ gegebenenfalls substituiertes C₁-C₈-Alkyl, Halogen, gegebenenfalls im Phenylring durch C₁-C₄-Alkyl substituiertes Phenylsulfonyl oder Phenoxysulfonyl, Cyclohexyloxycarbonylamino, C₂-C₄-Alkanoylamino, gegebenenfalls im Phenylring durch Halogen substituiertes Benzoylamino, 1-Azacycloheptan-N-sulfonyl oder 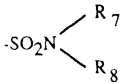 ist, wobei R₇ C₁-C₈-Alkyl oder gegebenenfalls durch C₁-C₄-Alkyl substituiertes Phenyl oder Cyclohexyl und R₈ Wasserstoff oder C₁-C₈-Alkyl ist, R₅ Wasserstoff, Halogen, C₁-C₈-Alkyl oder C₂-C₄-Alkanoylamino und R₆ Wasserstoff oder Halogen ist, 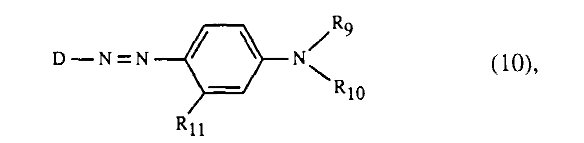 worin D gegebenenfalls substituiertes Phenyl, Thiophenyl oder Benzthiazolyl, R₉ C₁-C₈-Alkyl, R₁₀ gegebenenfalls substituiertes C₁-C₈-Alkyl und R₁₁ Wasserstoff oder C₁-C₄-Alkyl ist, und 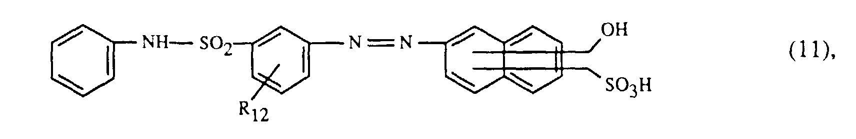 worin R₁₂ C₁-C₄-Alkyl ist, zusammen mit mindestens einem blaufärbenden Farbstoff der Formel 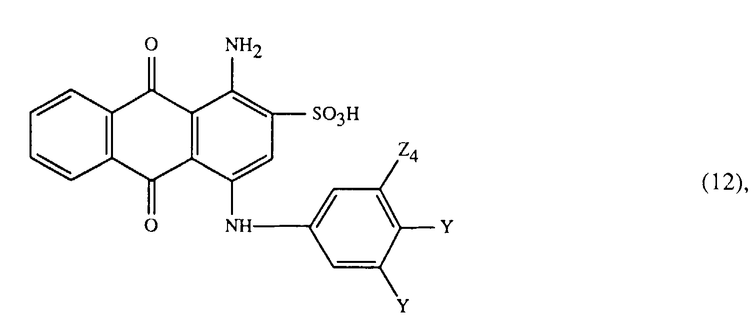 worin ein Y Wasserstoff oder Methyl und das andere Y C₂₋₄-Alkanoylamino oder C₂-C₄-Hydroxyalkylsulphamoyl bedeutet und Z₄ Wasserstoff oder Methyl ist, wobei für den Farbstoff der Formel (1) insbesondere die zuvor angegebenen Bevorzugungen gelten; vorzugsweise verwendet man als gelb- oder orangefärbenden Farbstoff einen Farbstoff der Formel (3).

Die in dem erfindungsgemässen Verfahren zum Trichromie-Färben oder -Bedrucken verwendeten Farbstoffe der Formeln (9), (10), (11) und (12) sind an sich bekannt oder können in Analogie zu bekannten Farbstoffen hergestellt werden.

Als C₁-C₈-Alkyl kommen für R₄, R₅, R₇ und R₈ in der Formel (9) und für R₉ und R₁₀ in Formel (10) unabhängig voneinander z. B. Methyl, Äthyl, Propyl, Isopropyl, Butyl, sek.-Butyl, tert.-Butyl, Isobutyl, Pentyl, Hexyl, Heptyl und Octyl in Betracht. Vorzugsweise sind R₄, R₅, R₇, R₈, R₉ und R₁₀ C₁-C₄-Alkyl.

Der Rest R₄ in Formel (9) als C₁-C₈-Alkyl kann substituiert sein z.B. durch Halogen, wie z.B. Chlor oder Brom und insbesondere Fluor. Als Beispiel sei der Trifluormethylrest genannt.

Der Rest R₁₀ in Formel (10) als C₁-C₈-Alkyl kann substituiert sein z.B. durch Sulfo, Sulfato oder Phenyl. Als Beispiele seien Benzyl, β-Sulfoäthyl, γ-Sulfopropyl und β-Sulfatoäthyl genannt.

Als Halogen kommen für R₄, R₅ und R₆ in Formel (9) unabhängig voneinander z.B. Fluor, Brom oder insbesondere Chlor in Betracht.

Der Rest R₄ in Formel (9) als Benzoylamino kann im Phenylring durch Halogen, wie z.B. Fluor, Brom oder insbesondere Chlor, substituiert sein.

Der Rest R₇ als Phenyl oder Cyclohexyl sowie der Rest R₄ als Phenylsulfonyl oder Phenoxysulfonyl kann durch C₁-C₄-Alkyl, wie z. B. Methyl, Äthyl, Propyl, Isopropyl, Butyl, sek.-Butyl, tert.-Butyl oder Isobutyl, insbesondere Methyl, substituiert sein.

Als C₁-C₄-Alkyl kommen für R₁₁ in Formel (10) und für R₁₂ in Formel (11) unabhängig voneinander z. B. Methyl, Äthyl, Propyl, Isopropyl, Butyl, sek.-Butyl, tert.-Butyl oder Isobutyl, insbesondere Methyl, in Betracht.

Als C₂-C₄-Alkanoylamino kommen für R₄ und R₅ in Formel (9) und für Y in Formel (12) unabhängig voneinander z.B. Acetylamino, Propionylamino oder Butyrylamino in Betracht.

Der Rest D in Formel (10) kann z.B. durch Halogen, wie Fluor, Chlor oder Brom, C₁-C₄-Alkyl, wie Methyl, Äthyl, Propyl, Isopropyl, Butyl, sek.-Butyl, tert.-Butyl oder Isobutyl, C₁-C₄-Alkoxy, wie z.B. Methoxy, Äthoxy, Propoxy oder Butoxy, C₁-C₄-Alkoxycarbonyl, wie z.B. Methoxycarbonyl oder Aethoxycarbonyl, Sulfo oder gegebenenfalls im Alkylteil durch Sulfo substituiertes C₁-C₄-Alkylaminosulfonyl, wie z.B. Methylaminosulfonyl, Aethylaminosulfonyl oder β-Sulfoäthylaminosulfonyl, substituiert sein.

Als C₂₋₄-Hydroxylalkylsulphamoylrest kommt für Y in Formel (12) beispielsweise der β-Hydroxyäthylsulphamoyl-, β-Hydroxypropylsulphamoyl-, γ-Hydroxypropylsulphamoyl- oder der β-Hydroxybutylsulphamoylrest in Betracht.

Bevorzugt verwendet man für das erfindungsgemässe Verfahren zum Trichromie-Färben oder -Bedrucken mindestens einen der rotfärbenden Farbstoffe der Formeln (9), (10) und (11), wobei im Farbstoff der Formel (9) R₄ Trifluoromethyl, Chlor, Acetylamino, -SO₂N(n-C₄H₉)₂, Phenoxysulfonyl, Phenylsulfonyl, 1-Azacycloheptan-N-sulfonyl, Cyclohexyloxycarbonylamino, gegebenenfalls im Phenylring durch Chlor substituiertes Benzoylamino oder gegebenenfalls im Phenylring durch Methyl substituiertes Phenylaminosulfonyl, Cyclohexylaminosulfonyl, N-(C₁-C₂-Alkyl)phenyl- oder N-(C₁-C₂-Alkyl)cyclohexyl-aminosulfonyl, R₅ Wasserstoff, Methyl, Chlor oder Acetylamino und R₆ Wasserstoff oder Chlor ist, und im Farbstoff der Formel (10) D durch Chlor, Sulfo, Methylaminosulfonyl, Aethylaminosulfonyl oder β-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, R₉ Aethyl, R₁₀ Aethyl, β-Sulfatoäthyl, 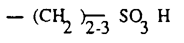 oder Benzyl und R₁₁ Wasserstoff oder Methyl ist, und im Farbstoff der Formel (11) R₁₂ Methyl ist.

Besonders bevorzugt verwendet man mindestens einen der rotfärbenden Farbstoffe der Formeln 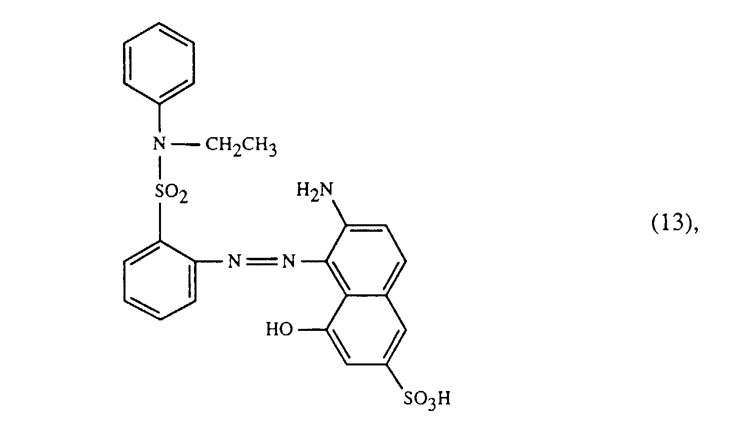 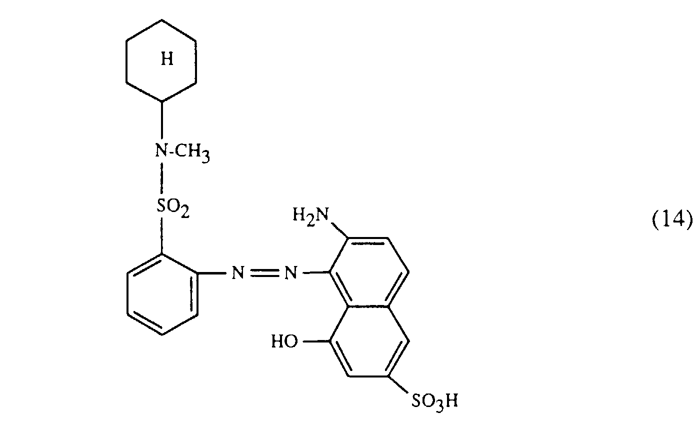 und

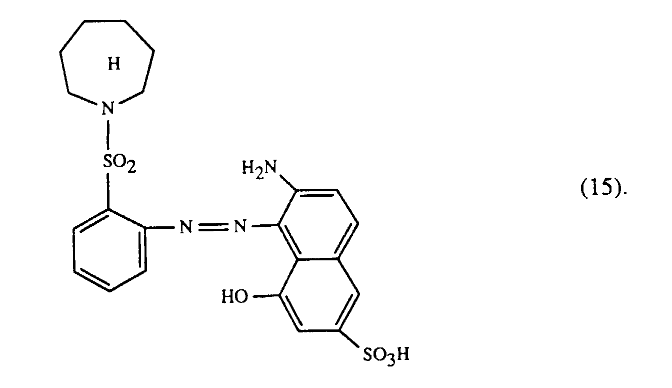

Ebenfalls besonders bevorzugt verwendet man für das erfindungsgemässe Verfahren mindestens einen der blaufärbenden Farbstoffe der Formeln 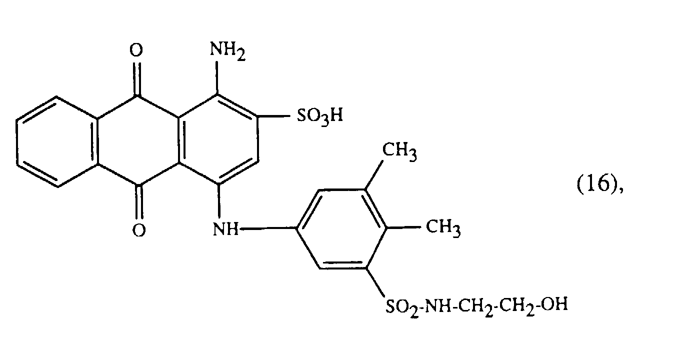 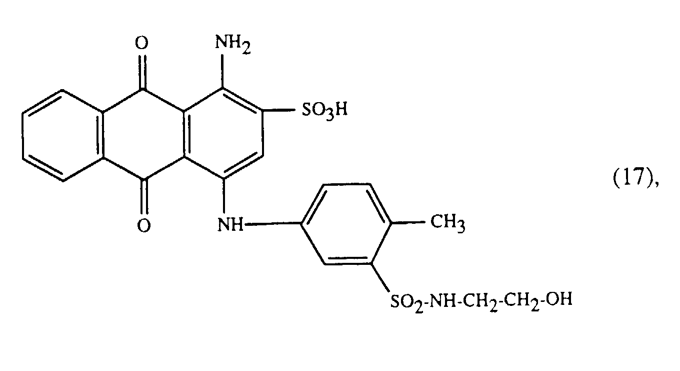 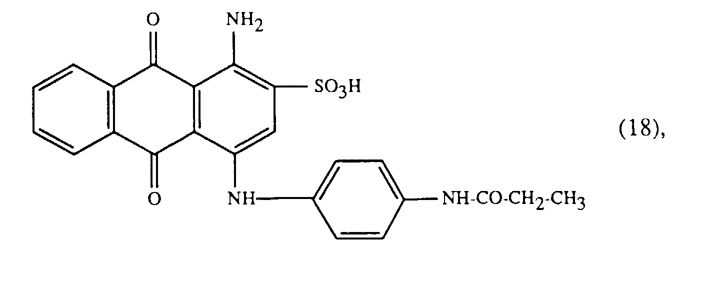 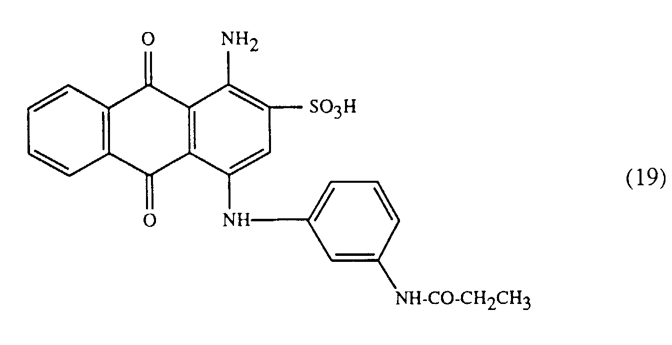 und

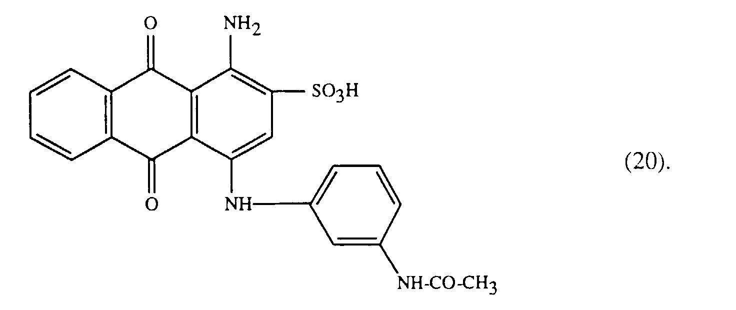

Verwendet man für das erfindungsgemässe Verfahren Mischungen blaufärbender Farbstoffe, so ist die Mischung der blaufärbenden Farbstoffe der Formeln (16) oder (17) mit einem Farbstoff der Formel (18), (19) oder (20) bevorzugt. Ganz besonders bevorzugt ist die Mischung der blaufärbenden Farbstoffe der Formeln 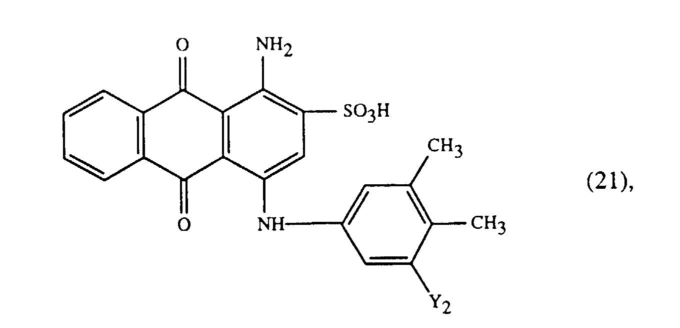 worin Y₂ ein C₂₋₄-Hydroxyalkylsulphamoylrest ist, und 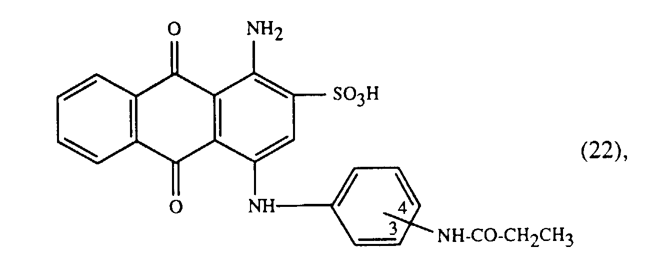 worin der Rest -NH-CO-CH₂CH₃ in 3- oder 4-Stellung gebunden ist.

Ganz besonders bevorzugt verwendet man für das erfindungsgemässe Verfahren zum Trichromie-Färben oder -Bedrucken mindestens einen Farbstoff der Formel (1) zusammen mit mindestens einem der rotfärbenden Farbstoffe der Formeln (13), (14) und (15), insbesondere (13) und (14), und mindestens einem der blaufärbenden Farbstoffe der Formeln (16), (17), (18), (19) und (20), wobei für den Farbstoff der Formel (1) insbesondere die zuvor angegebenen Bevorzugungen gelten; vorzugsweise verwendet man als gelb- oder orangefärbenden Farbstoff einen Farbstoff der Formel (3).

Eine ganz besonders wichtige Ausführungsform des erfindungsgemässen Verfahrens zum Trichromie-Färben oder -Bedrucken ist dadurch gekennzeichnet, dass man mindestens einen Farbstoff der Formel (1) zusammen mit einem rotfärbenden Farbstoff der Formel (14) und einem blaufärbenden Farbstoff der Formel (16) verwendet, wobei für den Farbstoff der Formel (1) insbesondere die zuvor angegebenen Bevorzugungen gelten; vorzugsweise verwendet man als gelb- oder orangefärbenden Farbstoff einen Farbstoff der Formel (3).

Werden in dem erfindungsgemässen Verfahren Farbstoffmischungen verwendet, so können diese durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen der Farbstoffe durch Zerstäubungstrocknen der wässrigen Farbstoffmischungen hergestellt werden.

Die erfindungsgemässen Farbstoffe der Formel (1) sowie die in dem erfindungsgemässen Verfahren zum Trichromie-Färben oder -Bedrucken verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Farbstoffe der Formel (1) sowie die in dem erfindungsgemässen Verfahren verwendeten Farbstoffe enthalten in der Regel weitere Zusätze wie z.B. Kochsalz oder Dextrin.

Das erfindungsgemässe Verfahren zum Trichromie-Färben oder -Bedrucken kann auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Die erfindungsgemässen Farbstoffe der Formel (1) sowie das erfindungsgemässe Verfahren zum Trichromie-Färben oder -Bedrucken sind besonders zum Färben aus Kurzflotten, wie z.B. bei Kontinuefärbeverfahren oder diskontinuierlichen und kontinuierlichen Schaumfärbeverfahren, geeignet.

Die erfindungsgemässen Farbstoffe der Formel (1) sowie die in dem erfindungsgemässen Verfahren verwendeten Farbstoffe zeichnen sich beim Trichromie-Färben oder -Bedrucken durch gleichmässigen Farbaufbau, gutes Aufziehverhalten, gute Nuancenkonstanz auch in verschiedenen Konzentrationen, gute Echtheiten sowie insbesondere durch sehr gute Kombinierbarkeit aus.

Die erfindungsgemässen Farbstoffe der Formel (1) sowie das erfindungsgemässe Verfahren zum Trichromie-Färben oder -Bedrucken eignen sich zum Färben oder Bedrucken sowohl von natürlichen Polyamidfasermaterialien wie z.B. Wolle, wie insbesondere von synthetischen Polyamidfasermaterialien, wie z.B. Polyamid 6 oder Polyamid 6.6, und sind geeignet zum Färben oder Bedrucken von Woll- und synthetischen Polyamid-Mischgeweben oder -Garnen.

Das genannte Textilmaterial kann dabei in den verschiedensten Verarbeitungsformen vorliegen, wie z.B. als Faser, Garn, Gewebe oder Gewirke und insbesondere in Form von Teppichen.

Die erfindungsgemässen Azofarbstoffe der Formel (1) ergeben egale Färbungen mit guten Allgemeinechtheiten, insbesondere guter Reib-, Nass-, Nassreib- und Lichtechtheit. Ferner sind die erfindungsgemässen Farbstoffe gut wasserlöslich und hartwasserbeständig.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: Eine neutrale, 50° heisse Lösung von 37 Teilen 3-(β-Hydroxypropoxy)-4-amino-azobenzol-3'-sulfonsäure in 500 Teilen Wasser lässt man gleichzeitig mit 26 Teilen einer wässrigen Natriumnitritlösung (4N) in die Mischung von 28 Teilen konzentrierter Salzsäure in 200 Teilen Wasser einlaufen und hält die Temperatur der Reaktionsmischung durch Zugabe von Eis bei 20 bis 25°. Nach beendeter Zugabe wird noch 2 Stunden nachgerührt und der Nitritüberschuss mit wenig Amidosulfonsäure zerstört. Das so bereitete Diazotierungsgemisch lässt man langsam in eine 0 bis 5° kalte Lösung von 14 Teilen 2,4-Pentandion und 180 Teilen Natriumacetat in 500 Teilen Wasser einfliessen. Nach mehrstündigem Rühren bei 0 bis 5° wird zur Vervollständigung der Reaktion auf 30° erwärmt und mit Natriumacetat der pH auf einen Wert von 5,5 gestellt. Anschliessend wird der Niederschlag abgesaugt und bei 60° getrocknet. Man erhält 44 Teile eines orangefarbenen Pulvers.

5 Teile des nach obigen Angaben hergestellten Reaktionsproduktes werden in 80 Teilen Eisessig und 6 Teilen Wasser bei Raumtemperatur suspendiert. Unter Rühren werden auf einmal 1,2 Teile Hydrazinhydrat zugefügt. Das Reaktionsgemisch wird langsam auf 50° erwärmt und 2 Stunden gerührt. Zum Schluss wird ca. 10 Minuten auf 90° erhitzt, bis dünnschichtchromatographisch kein Edukt mehr nachweisbar ist. Nach Abkühlung auf Raumtemperatur wird der Farbstoff durch Zusatz von Salzsäure (2N) ausgefällt. Nach Filtration, Nachwaschen mit wenig Wasser und Trocknung bei einer Temperatur von 80° erhält man 4,8 Teile eines Farbstoffs, der in Form der freien Säure der Verbindung der Formel 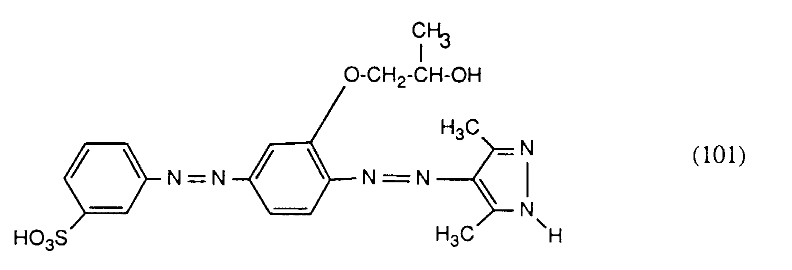 entspricht. Der Farbstoff der Formel (101) färbt synthetisches und natürliches Polyamidfasermaterial in gelben Farbtönen

Beispiele 2 bis 117: Verfährt man wie in Beispiel 1 angegeben, verwendet jedoch anstelle von 37 Teilen 3-(β-Hydroxypropoxy)-4-amino-azobenzol-3'-sulfonsäure eine äquimolare Menge einer Verbindung der Formel 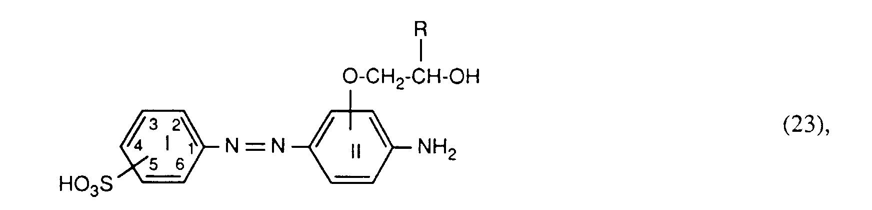 worin die Sulfogruppe in der in Tabelle 1 in Spalte 2 angegebenen Position an den Benzolring I gebunden ist, R die in Tabelle 1 in Spalte 3 angegebenen Bedeutungen hat und die Benzolringe I und II keine weiteren Substituenten enthalten, und anstelle von 14 Teilen 2,4-Pentandion eine äquimolare Menge einer Verbindung der Formel 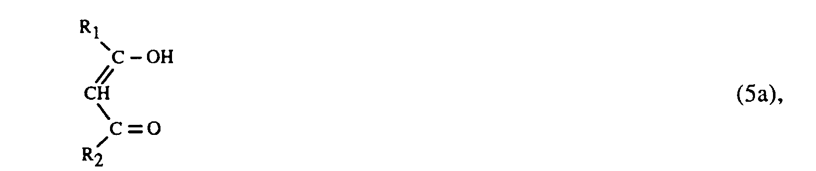 worin R₁ und R₂ die in Tabelle 1 in den Spalten 4 und 5 angegebenen Bedeutungen haben, jedoch nicht Wasserstoff bedeuten, sowie anstelle von 1,2 Teilen Hydrazinhydrat eine äquimolare Menge einer Verbindung der Formel

H₂N-NH-R₃ (7),

worin R₃ die in Tabelle 1 in Spalte 6 angegebenen Bedeutungen hat, so erhält man analoge Farbstoffe, die synthetische und natürliche Polyamidfasermaterialien in gelben Farbtönen färben.

Die in der folgenden Tabelle 1 angegebenen Farbstoffe, worin mindestens einer der Reste R₁ und R₂ Wasserstoff bedeutet, werden wie angegeben erhalten, wobei man jedoch anstelle der Verbindung der Formel (5a) eine äquimolare Menge einer Verbindung der Formel 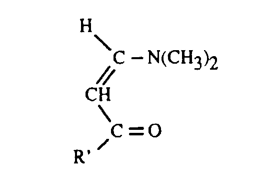 verwendet, worin R' die für R₁ oder R₂ in Tabelle 1 angegebenen Bedeutungen hat, und wobei der andere Rest R₁ oder R₂ in Tabelle 1 Wasserstoff ist.

Die in den Beispielen der folgenden Tabelle 1 angegebenen Farbstoffe, worin R₁ und R₂ voneinander verschiedene Bedeutungen haben und R₃ nicht Wasserstoff bedeutet, werden als Isomerengemische der Verbindungen der Formeln 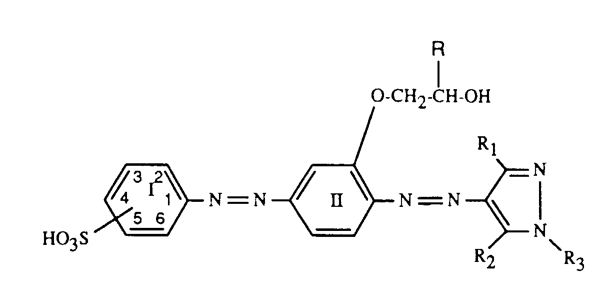 und 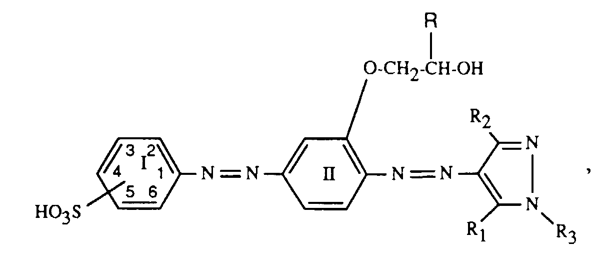 worin R, R₁, R₂ und R₃ die in Tabelle 1 in den Spalten 3 bis 6 angegebenen Bedeutungen haben und die Sulfogruppe in der in Tabelle 1 in Spalte 2 angegebenen Position an den Benzolring I gebunden ist und die Benzolringe I und II keine weiteren Substituenten enthalten, erhalten. Die Isomerengemische färben synthetische und natürliche Polyamidfasermaterialien in gelben Farbtönen.

**Tabelle 1**

| Bsp. | Substituent Benzolring I | R | R₁ | R₂ | R₃ |
|---|---|---|---|---|---|
| 2 | 4-SO₃H | -H | -CH₃ | -CH₃ | -H |
| 3 | 4-SO₃H | -H | -CH₃ | -CH₃ | -CH₃ |
| 4 | 4-SO₃H | -H | -CH₃ | -CH₃ | -C₂H₅ |
| 5 | 4-SO₃H | -H | -CH₃ | -CH₃ | Phenyl |
| 6 | 3-SO₃H | -H | -CH₃ | -CH₃ | -H |
| 7 | 3-SO₃H | -H | -CH₃ | -CH₃ | -CH₃ |
| 8 | 3-SO₃H | -H | -CH₃ | -CH₃ | -C₂H₅ |
| 9 | 3-SO₃H | -H | -CH₃ | -CH₃ | Phenyl |
| 10 | 2-SO₃H | -H | -CH₃ | -CH₃ | -H |
| 11 | 2-SO₃H | -H | -CH₃ | -CH₃ | -CH₃ |
| 12 | 2-SO₃H | -H | -CH₃ | -CH₃ | -C₂H₅ |
| 13 | 2-SO₃H | -H | -CH₃ | -CH₃ | Phenyl |
| 14 | 4-SO₃H | -H | -CH₃ | -C₂H₅ | -H |
| 15 | 4-SO₃H | -H | -CH₃ | -C₂H₅ | -CH₃ |
| 16 | 4-SO₃H | -H | -CH₃ | -C₂H₅ | -C₂H₅ |
| 17 | 4-SO₃H | -H | -CH₃ | -C₂H₅ | Phenyl |
| 18 | 3-SO₃H | -H | -CH₃ | -C₂H₅ | -H |
| 19 | 3-SO₃H | -H | -CH₃ | -C₂H₅ | -CH₃ |
| 20 | 3-SO₃H | -H | -CH₃ | -C₂H₅ | -C₂H₅ |
| 21 | 3-SO₃H | -H | -CH₃ | -C₂H₅ | Phenyl |
| 22 | 2-SO₃H | -H | -CH₃ | -C₂H₅ | -H |
| 23 | 2-SO₃H | -H | -CH₃ | -C₂H₅ | -CH₃ |
| 24 | 2-SO₃H | -H | -CH₃ | -C₂H₅ | -C₂H₅ |
| 25 | 2-SO₃H | -H | -CH₃ | -C₂H₅ | Phenyl |
| 26 | 4-SO₃H | -H | -C₂H₅ | -C₂H₅ | -H |
| 27 | 4-SO₃H | -H | -C₂H₅ | -C₂H₅ | -CH₃ |
| 28 | 4-SO₃H | -H | -C₂H₅ | -C₂H₅ | -C₂H₅ |
| 29 | 4-SO₃H | -H | -C₂H₅ | -C₂H₅ | Phenyl |
| 30 | 3-SO₃H | -H | -C₂H₅ | -C₂H₅ | -H |
| 31 | 3-SO₃H | -H | -C₂H₅ | -C₂H₅ | -CH₃ |
| 32 | 3-SO₃H | -H | -C₂H₅ | -C₂H₅ | -C₂H₅ |
| 33 | 3-SO₃H | -H | -C₂H₅ | -C₂H₅ | Phenyl |
| 34 | 2-SO₃H | -H | -C₂H₅ | -C₂H₅ | -H |
| 35 | 2-SO₃H | -H | -C₂H₅ | -C₂H₅ | -CH₃ |
| 36 | 2-SO₃H | -H | -C₂H₅ | -C₂H₅ | -C₂H₅ |
| 37 | 2-SO₃H | -H | -C₂H₅ | -C₂H₅ | Phenyl |
| 38 | 4-SO₃H | -CH₃ | -CH₃ | -CH₃ | -H |
| 39 | 4-SO₃H | -CH₃ | -CH₃ | -CH₃ | -CH₃ |
| 40 | 4-SO₃H | -CH₃ | -CH₃ | -CH₃ | -C₂H₅ |
| 41 | 4-SO₃H | -CH₃ | -CH₃ | -CH₃ | Phenyl |
| 42 | 3-SO₃H | -CH₃ | -CH₃ | -CH₃ | -CH₃ |
| 43 | 3-SO₃H | -CH₃ | -CH₃ | -CH₃ | -C₂H₅ |
| 44 | 3-SO₃H | -CH₃ | -CH₃ | -CH₃ | Phenyl |
| 45 | 2-SO₃H | -CH₃ | -CH₃ | -CH₃ | -H |
| 46 | 2-SO₃H | -CH₃ | -CH₃ | -CH₃ | -CH₃ |
| 47 | 2-SO₃H | -CH₃ | -CH₃ | -CH₃ | -C₂H₅ |
| 48 | 2-SO₃H | -CH₃ | -CH₃ | -CH₃ | Phenyl |
| 49 | 4-SO₃H | -CH₃ | -CH₃ | -C₂H₅ | -H |
| 50 | 4-SO₃H | -CH₃ | -CH₃ | -C₂H₅ | -CH₃ |
| 51 | 4-SO₃H | -CH₃ | -CH₃ | -C₂H₅ | -C₂H₅ |
| 52 | 4-SO₃H | -CH₃ | -CH₃ | -C₂H₅ | Phenyl |
| 53 | 3-SO₃H | -CH₃ | -CH₃ | -C₂H₅ | -H |
| 54 | 3-SO₃H | -CH₃ | -CH₃ | -C₂H₅ | -CH₃ |
| 55 | 3-SO₃H | -CH₃ | -CH₃ | -C₂H₅ | -C₂H₅ |
| 56 | 3-SO₃H | -CH₃ | -CH₃ | -C₂H₅ | Phenyl |
| 57 | 2-SO₃H | -CH₃ | -CH₃ | -C₂H₅ | -H |
| 58 | 2-SO₃H | -CH₃ | -CH₃ | -C₂H₅ | -CH₃ |
| 59 | 2-SO₃H | -CH₃ | -CH₃ | -C₂H₅ | -C₂H₅ |
| 60 | 2-SO₃H | -CH₃ | -CH₃ | -C₂H₅ | Phenyl |
| 61 | 4-SO₃H | -CH₃ | -C₂H₅ | -C₂H₅ | -H |
| 62 | 4-SO₃H | -CH₃ | -C₂H₅ | -C₂H₅ | -CH₃ |
| 63 | 4-SO₃H | -CH₃ | -C₂H₅ | -C₂H₅ | -C₂H₅ |
| 64 | 4-SO₃H | -CH₃ | -C₂H₅ | -C₂H₅ | Phenyl |
| 65 | 3-SO₃H | -CH₃ | -C₂H₅ | -C₂H₅ | -H |
| 66 | 3-SO₃H | -CH₃ | -C₂H₅ | -C₂H₅ | -CH₃ |
| 67 | 3-SO₃H | -CH₃ | -C₂H₅ | -C₂H₅ | -C₂H₅ |
| 68 | 3-SO₃H | -CH₃ | -C₂H₅ | -C₂H₅ | Phenyl |
| 69 | 2-SO₃H | -CH₃ | -C₂H₅ | -C₂H₅ | -H |
| 70 | 2-SO₃H | -CH₃ | -C₂H₅ | -C₂H₅ | -CH₃ |
| 71 | 2-SO₃H | -CH₃ | -C₂H₅ | -C₂H₅ | -C₂H₅ |
| 72 | 2-SO₃H | -CH₃ | -C₂H₅ | -C₂H₅ | Phenyl |
| 73 | 4-SO₃H | -C₂H₅ | -CH₃ | -CH₃ | -H |
| 74 | 4-SO₃H | -C₂H₅ | -CH₃ | -CH₃ | -CH₃ |
| 75 | 4-SO₃H | -C₂H₅ | -CH₃ | -CH₃ | -C₂H₅ |
| 76 | 4-SO₃H | -C₂H₅ | -CH₃ | -CH₃ | Phenyl |
| 77 | 3-SO₃H | -C₂H₅ | -CH₃ | -CH₃ | -H |
| 78 | 3-SO₃H | -C₂H₅ | -CH₃ | -CH₃ | -CH₃ |
| 79 | 3-SO₃H | -C₂H₅ | -CH₃ | -CH₃ | -C₂H₅ |
| 80 | 3-SO₃H | -C₂H₅ | -CH₃ | -CH₃ | Phenyl |
| 81 | 2-SO₃H | -C₂H₅ | -CH₃ | -CH₃ | -H |
| 82 | 2-SO₃H | -C₂H₅ | -CH₃ | -CH₃ | -CH₃ |
| 83 | 2-SO₃H | -C₂H₅ | -CH₃ | -CH₃ | -C₂H₅ |
| 84 | 2-SO₃H | -C₂H₅ | -CH₃ | -CH₃ | Phenyl |
| 85 | 4-SO₃H | -C₂H₅ | -CH₃ | -C₂H₅ | -H |
| 86 | 4-SO₃H | -C₂H₅ | -CH₃ | -C₂H₅ | -CH₃ |
| 87 | 4-SO₃H | -C₂H₅ | -CH₃ | -C₂H₅ | -C₂H₅ |
| 88 | 4-SO₃H | -C₂H₅ | -CH₃ | -C₂H₅ | Phenyl |
| 89 | 3-SO₃H | -C₂H₅ | -CH₃ | -C₂H₅ | -H |
| 90 | 3-SO₃H | -C₂H₅ | -CH₃ | -C₂H₅ | -CH₃ |
| 91 | 3-SO₃H | -C₂H₅ | -CH₃ | -C₂H₅ | -C₂H₅ |
| 92 | 3-SO₃H | -C₂H₅ | -CH₃ | -C₂H₅ | Phenyl |
| 93 | 2-SO₃H | -C₂H₅ | -CH₃ | -C₂H₅ | -H |
| 94 | 2-SO₃H | -C₂H₅ | -CH₃ | -C₂H₅ | -CH₃ |
| 95 | 2-SO₃H | -C₂H₅ | -CH₃ | -C₂H₅ | -C₂H₅ |
| 96 | 2-SO₃H | -C₂H₅ | -CH₃ | -C₂H₅ | Phenyl |
| 97 | 4-SO₃H | -C₂H₅ | -C₂H₅ | -C₂H₅ | -H |
| 98 | 4-SO₃H | -C₂H₅ | -C₂H₅ | -C₂H₅ | -CH₃ |
| 99 | 4-SO₃H | -C₂H₅ | -C₂H₅ | -C₂H₅ | -C₂H₅ |
| 100 | 4-SO₃H | -C₂H₅ | -C₂H₅ | -C₂H₅ | Phenyl |
| 101 | 3-SO₃H | -C₂H₅ | -C₂H₅ | -C₂H₅ | -H |
| 102 | 3-SO₃H | -C₂H₅ | -C₂H₅ | -C₂H₅ | -CH₃ |
| 103 | 3-SO₃H | -C₂H₅ | -C₂H₅ | -C₂H₅ | -C₂H₅ |
| 104 | 3-SO₃H | -C₂H₅ | -C₂H₅ | -C₂H₅ | Phenyl |
| 105 | 2-SO₃H | -C₂H₅ | -C₂H₅ | -C₂H₅ | -H |
| 106 | 2-SO₃H | -C₂H₅ | -C₂H₅ | -C₂H₅ | -CH₃ |
| 107 | 2-SO₃H | -C₂H₅ | -C₂H₅ | -C₂H₅ | -C₂H₅ |
| 108 | 2-SO₃H | -C₂H₅ | -C₂H₅ | -C₂H₅ | Phenyl |
| 109 | 4-SO₃H | -CH₃ | -CH₃ | -CH₃ | -n-C₃H₇ |
| 110 | 4-SO₃H | -CH₃ | -CH₃ | -CH₃ | -iso-C₃H₇ |
| 111 | 3-SO₃H | -CH₃ | -CH₃ | -CH₃ | -n-C₄H₉ |
| 112 | 3-SO₃H | -CH₃ | -CH₃ | -CH₃ | -sec-C₄H₉ |
| 113 | 2-SO₃H | -CH₃ | -CH₃ | -CH₃ | -tert-C₄H₉ |
| 114 | 2-SO₃H | -CH₃ | -CH₃ | -CH₃ | -cyclo-C₆H₁₁ |
| 115 | 4-SO₃H | -C₂H₅ | -H | -CH₃ | -H |
| 116 | 2-SO₃H | -CH₃ | -CH₃ | -H | -C₂H₅ |
| 117 | 3-SO₃H | -CH₃ | -H | -H | Phenyl |

Beispiele 118 bis 125: Verfährt man wie in Beispiel 1 angegeben, verwendet jedoch gegebenenfalls anstelle von 37 Teilen 3-(β-Hydroxypropoxy)-4-amino-azobenzol-3'-sulfonsäure eine äquimolare Menge eines der in der folgenden Tabelle 2 in Spalte 2 in Form der freien Säure angegebenen Amine, gegebenenfalls anstelle von 14 Teilen 2,4-Pentandion eine äquimolare Menge einer Kupplungskomponente der Formel (5a), worin R₁ und R₂ die in den Spalten 3 und 4 angegebenen Bedeutungen haben, und gegebenenfalls anstelle von 1,2 Teilen Hydrazinhydrat eine äquimolare Menge einer Verbindung der Formel (7), worin R₃ die in der Spalte 5 angegebene Bedeutung hat, so erhält man analoge Farbstoffe, die synthetische und natürliche Polyamidfasermaterialien in goldgelben oder orangen Farbtönen färben.

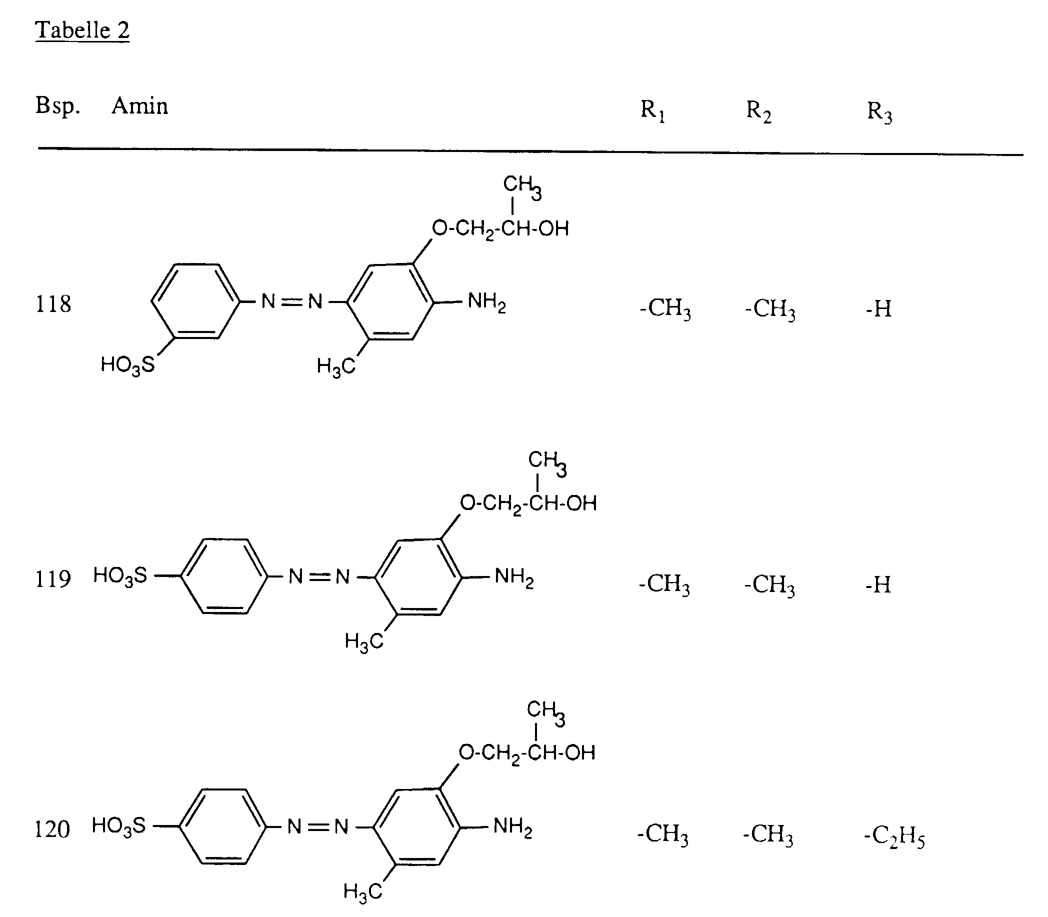

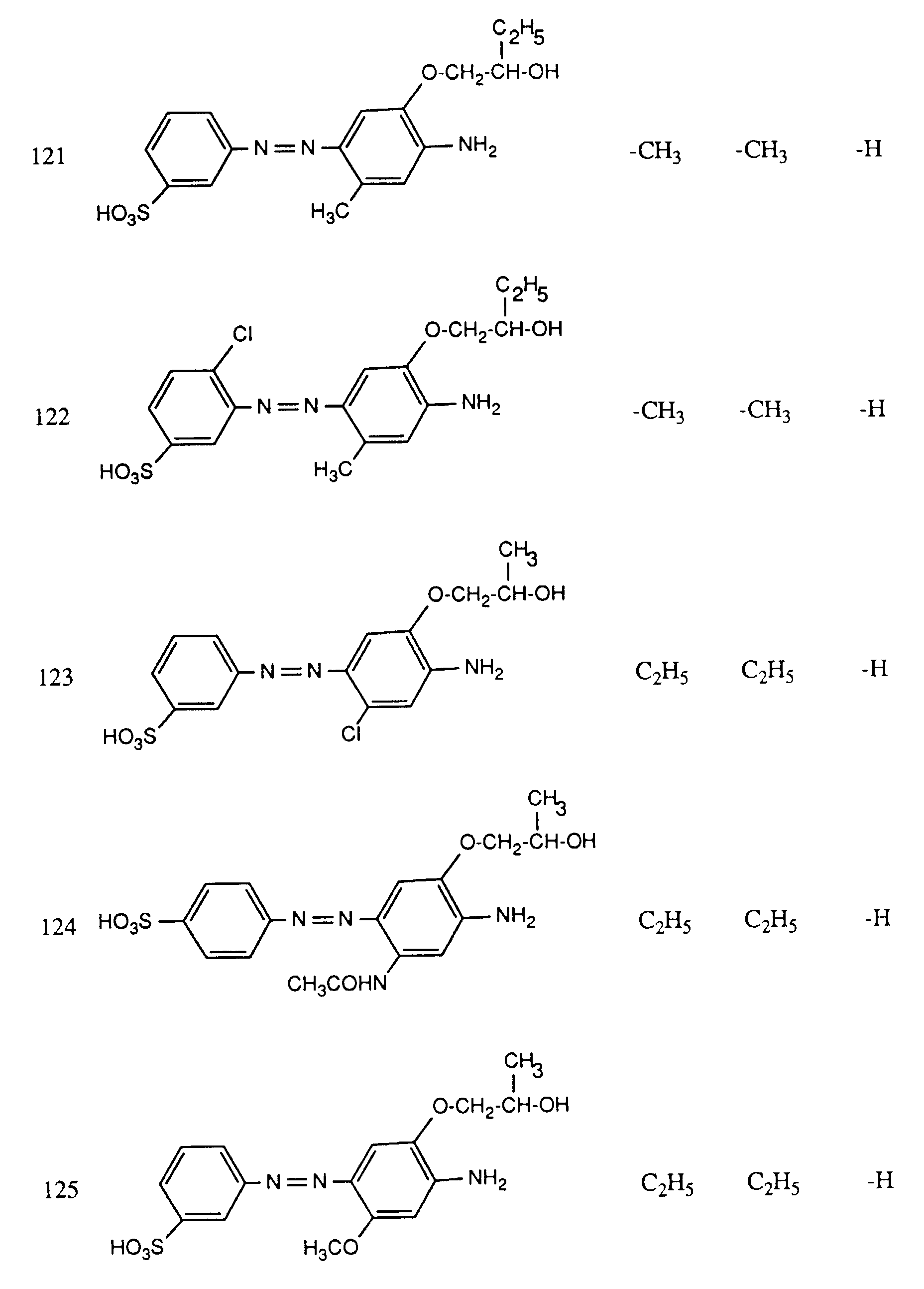

Färbebeispiel 1: Man färbt 10 Teile Polyamid-6.6 Fasermaterial (Helancatrikot) in 500 Teilen einer wässrigen Flotte, die 2 g/l Ammonacetat enthält und mit Essigsäure auf pH 5 gestellt wird. Als Farbstoffe werden 0,05 % des roten Farbstoffs der in Form der freien Säure der Formel 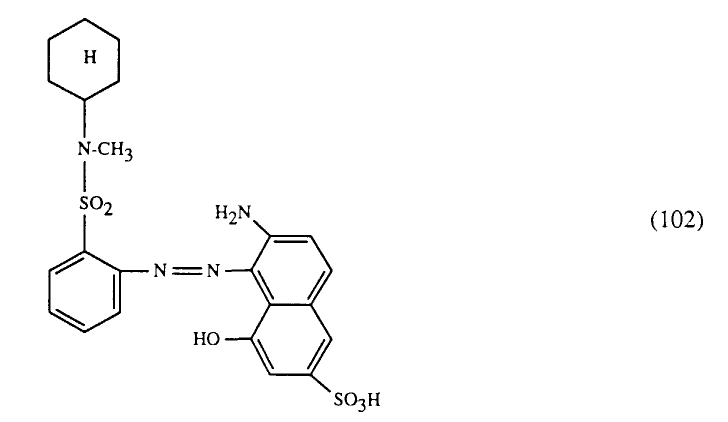 entspricht, 0,18 % des gelben Farbstoffs der in Form der freien Säure der Formel (101) entspricht und 0,17 % des blauen Farbstoffs der in Form der freien Säure der Formel 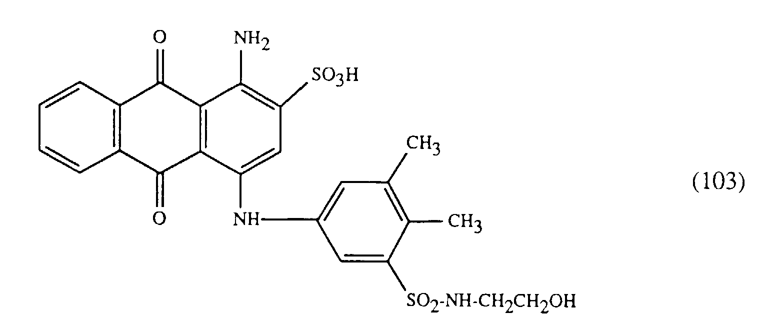 entspricht, verwendet, wobei sich die Mengenangaben auf das Fasergewicht beziehen.

Die Färbedauer bei einer Temperatur von 98° beträgt 30 bis 90 Minuten. Das gefärbte Polyamidfasermaterial wird anschliessend herausgenommen und wie üblich gespült und getrocknet. Man erhält ein in einem braunen Farbton völlig egal gefärbtes Gewebestück, das keinerlei materialbedingte Streifigkeit aufweist.

Färbebeispiel 2: Man färbt 10 Teile Polyamid 6.6-Garn in 400 Teilen einer wässrigen Flotte, die 1,5 g/l Ammonacetat enthält und mit Essigsäure auf pH 5,5 gestellt wird. Als Farbstoffe werden 0,13 % des gemäss Beispiel 65 erhaltenen gelben Farbstoffs, 0,1 % des Farbstoffs der Formel (102) und 0,12 % des Farbstoffs der Formel (103) verwendet, wobei sich die Mengenangaben auf das Fasergewicht beziehen. Das Färbebad wird innerhalb von 30 Minuten auf 98°C erhitzt und 60 Minuten bei 96° bis 98° gehalten. Das gefärbte Garn wird anschliessend herausgenommen und wie üblich gespült und getrocknet. Man erhält ein in einem braunen Farbton gefärbtes Garn.

Färbebeispiel 3: Man färbt 10 Teile Polyamid 6.6-Teppichgarn in 400 Teilen einer wässrigen Flotte, die 1,5 g/l Ammonacetat enthält und mit Essigsäure auf pH 5,5 gestellt wird. Als Farbstoffe werden 0,15 % des roten Farbstoffs der Formel 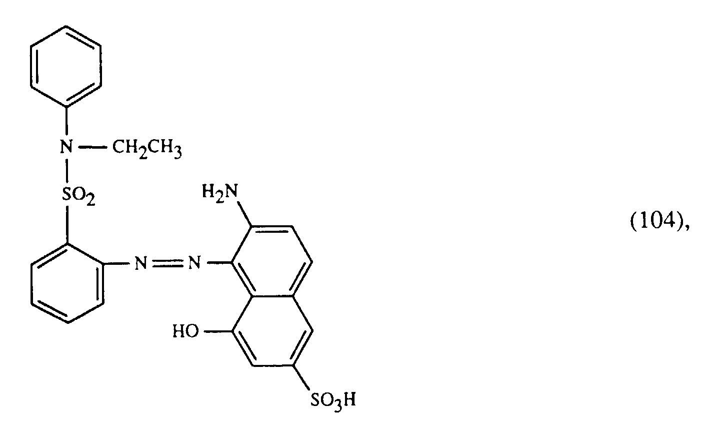 0,625 % des gemäss Beispiel 119 erhaltenen gelben Farbstoffs und 0,52 % des blauen Farbstoffs der Formel (103) verwendet, wobei sich die Mengenangaben auf das Fasergewicht beziehen. Das Färbebad wird innerhalb von 30 Minuten auf 98° erhitzt und 60 Minuten bei 96° bis 98° gehalten. Das gefärbte Garn wird anschliessend herausgenommen und wie üblich gespült und getrocknet. Man erhält ein in einem braunen Farbton gefärbtes Garn.

Färbebeispiel 4: Wenn man wie in Färbebeispiel 3 angegeben vorgeht, jedoch anstelle der Farbstoffe der Formeln (104) und (103)
0,32 % des Farbstoffs der Formel (102) und
0,61 % des Farbstoffs der Formel (103)
verwendet, so erhält man ebenfalls ein in einem braunen Farbton gefärbtes Garn.

Färbebeispiel 5: (Teppichdruck)
Ein Velours-Teppich aus Polyamid-6 mit einem Florgewicht von 400 g/m² wird für die Fondfärbung mit einer wässrigen Klotzflotte der nachstehenden Zusammensetzung

| | |
|---|---|
| 0,1 g/l | Farbstoff der Formel (101), |
| 0,1 g/l | Farbstoff der Formel (103), |
| 2 g/l | Verdicker auf der Basis natürlicher Polysaccharide, |
| 0,5 g/l | Netzmittel auf der Basis eines sulfatierten Alkyl-Aryl-Polyglycolates, und |
| 0,5 g/l | Entschäumer auf der Basis hochsiedender Alkohole, |

die mit Essigsäure auf den pH-Wert 4,5 eingestellt ist, foulardiert und auf 80 % der Flottenaufnahme abgequetscht. Auf den so vorbehandelten Teppich wird über eine Druckschablone ein Muster mit der nachstehenden wässrigen Druckpaste aufgebracht:

| | |
|---|---|
| 1 g/l | Farbstoff der Formel (101), |
| 20 g/l | Farbstoff der Formel (102), |
| 10 g/l | Farbstoff der Formel (103), |
| 15 g/l | Verdicker auf der Basis natürlicher Polysaccharide, |
| 2 g/l | Netzmittel auf der Basis eines sulfatierten Alkyl-Aryl-Polyglycolates, |
| 1 g/l | Entschäumer auf der Basis hochsiedender Alkohole. |

Die Druckpaste ist mit Essigsäure auf pH-Wert 4,5 gestellt.

Das bedruckte Material wird anschliessend während 5 Minuten mit Sattdampf von 101° behandelt zur Fixierung der Farbstoffe, gespült, neutralisiert, erneut gespült und getrocknet.

Man erhält einen Verlours-Teppich mit bordeaux-farbigem Muster auf blassolivem Untergrund mit sehr scharfen Konturen, welcher eine gute Penetration und keinerlei "Frosting" aufweist.

Färbebeispiel 6: (Teppich-Kontinue-Färbung)
2,7 Teile des gelben Farbstoffes der Formel (101), 1,2 Teile des roten Farbstoffes der Formel (102) und 1,3 Teile des blauen Farbstoffes der Formel (103) werden in 100 Teilen Wasser durch kurzes Kochen gelöst. Diese Lösung wird hierauf zu einer Lösung, enthaltend 3 Teile eines Verdickungsmittels auf der Basis von Johannisbrotkemmehl, 5,0 Teile eines koazervatbildenden Klotzhilfsmittels auf der Basis eines Kondensationsproduktes einer höher molekularen Fettsäure mit einem Oxyalkylamin, 2,0 Teilen krist.

Mononatriumphosphat und 1,0 Teile krist. Dinatriumphosphat in 500 Teilen kaltem Wasser zugegeben. Anschliessend wird mit kaltem Wasser auf 1000 Teile aufgefüllt. Von dieser, einen pH-Wert von 5,5 bis 6,5 aufweisenden Flotte werden 300 %, bezogen auf das Teppichgewicht, auf einen Polyamid-6.6-Nadelflor-Rohteppich aufgetragen, bei einer Teppichgeschwindigkeit von 8 Meter pro Minute. Der getränkte Teppich gelangt in einen Schleifendämpfer, wo er während 10 Minuten mit Sattdampf von 98 bis 100° behandelt wird.

Nach dem Waschen in einer Breitwaschmaschine erhält man einen in einem neutral braunen Farbton gefärbten Teppich.

## Patentansprüche (Patentansprüche für folgende(n) Vertragsstaat(en): BE, CH, DE, FR, GB, IT, LI)

1. Azofarbstoffe der Formel 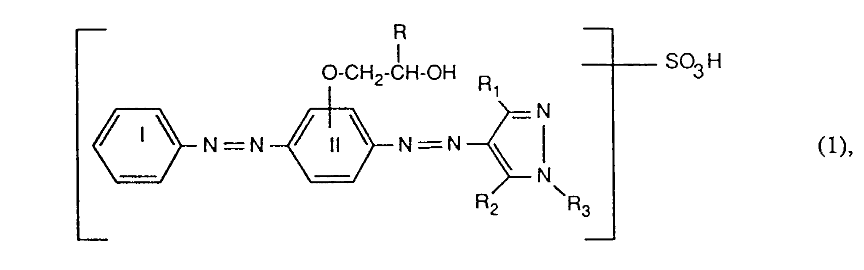 worin R, R₁ und R₂ unabhängig voneinander Wasserstoff, gegebenenfalls substituiertes C₁-C₈-Alkyl oder Phenyl sind, R₃ Wasserstoff oder gegebenenfalls substituiertes C₁-C₈-Alkyl, C₅-C₇-Cycloalkyl oder Phenyl ist und die Benzolringe I und II gegebenenfalls weitersubstituiert sind.

2. Azofarbstoffe gemäss Anspruch 1, dadurch gekennzeichnet, dass R Wasserstoff oder gegebenenfalls durch Hydroxy substituiertes C₁-C₄-Alkyl, insbesondere Methyl oder Aethyl, ist.

3. Azofarbstoffe gemäss einem der Ansprüche 1 und 2, dadurch gekennzeichnet, dass R₁ und R₂ unabhängig voneinander Wasserstoff, Phenyl oder C₁-C₄-Alkyl, insbesondere Methyl oder Aethyl, sind.

4. Azofarbstoffe gemäss einem der Ansprüche 1 bis 3, dadurch gekennzeichnet, dass R₃ Wasserstoff, C₁-C₄-Alkyl oder Phenyl ist.

5. Azofarbstoffe gemäss einem der Ansprüche 1 bis 4, dadurch gekennzeichnet, dass die Benzolringe I und II unabhängig voneinander gegebenenfalls durch C₁-C₄-Alkyl, C₁-C₄-Alkoxy, C₂-C₄-Alkanoylamino oder Halogen weitersubstituiert sind.

6. Azofarbstoffe gemäss einem der Ansprüche 1 bis 5, dadurch gekennzeichnet, dass die Sulfogruppe an den Benzolring I gebunden ist.

7. Azofarbstoffe gemäss einem der Ansprüche 1 bis 6, dadurch gekennzeichnet, dass R Wasserstoff oder gegebenenfalls durch Hydroxy substituiertes C₁-C₄-Alkyl ist, R₁ und R₂ unabhängig voneinander Wasserstoff oder C₁-C₄-Alkyl sind, R₃ Wasserstoff, C₁-C₄-Alkyl oder Phenyl ist, die Benzolringe I und II unabhängig voneinander gegebenenfalls durch C₁-C₄-Alkyl, C₁-C₄-Alkoxy, C₂-C₄-Alkanoylamino oder Halogen weitersubstituiert sind und die Sulfogruppe an den Benzolring I gebunden ist.

8. Azofarbstoffe gemäss Anspruch 1, der Formel 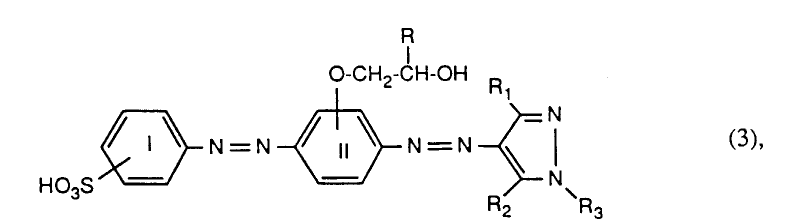 worin R Methyl oder Aethyl ist, R₁ und R₂ unabhängig voneinander Methyl oder Aethyl sind, R₃ Wasserstoff, Methyl, Aethyl oder Phenyl ist und die Benzolringe I und II unabhängig voneinander gegebenenfalls durch Methyl, Methoxy, Acetylamino oder Chlor weitersubstituiert sind.

9. Verfahren zur Herstellung von Azofarbstoffen gemäss Anspruch 1, dadurch gekennzeichnet, dass man ein Amin der Formel 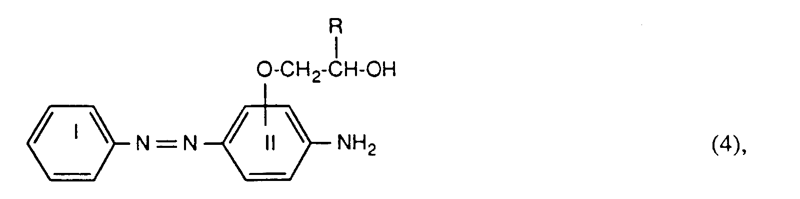 worin R die in Anspruch 1 angegebenen Bedeutungen hat und die Benzolringe I und II gegebenenfalls substituiert sind, diazotiert und auf eine Kupplungskomponente der Formel 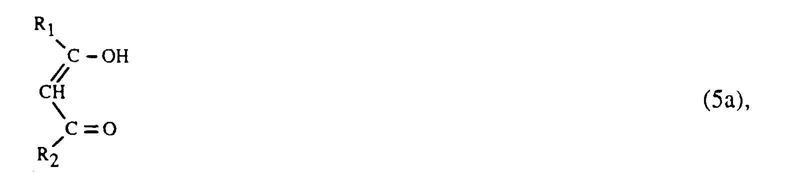 worin R₁ und R₂ unabhängig voneinander gegebenenfalls substituiertes C₁-C₈-Alkyl oder Phenyl sind,
oder auf eine Kupplungskomponente der Formel 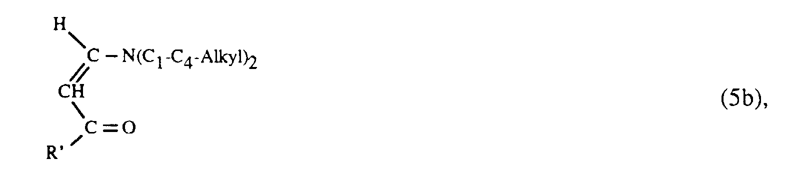 worin R' die für R₁ und R₂ in Anspruch 1 angegebenen Bedeutungen hat, kuppelt und das Reaktionsprodukt der Formel 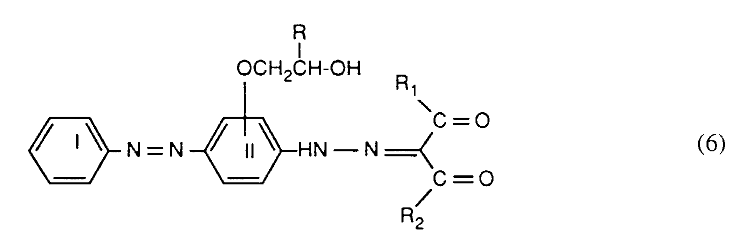 mit einem Hydrazin der Formel
H₂N-NH-R₃ (7),
worin R₃ die in Anspruch 1 angegebenen Bedeutungen hat, umsetzt, wobei das Amin der Formel (4), die umgesetzte Kupplungskomponente der Formel (5a) oder (5b) und das Hydrazin der Formel (7) zusammen mindestens eine Sulfogruppe enthalten.

10. Verfahren zum Trichromie-Färben oder -Bedrucken von natürlichen und synthetischen Polyamidfasermaterialien mit Farbstoffmischungen, dadurch gekennzeichnet, dass man mindestens einen gelb- oder orangefärbenden Farbstoff der Formel 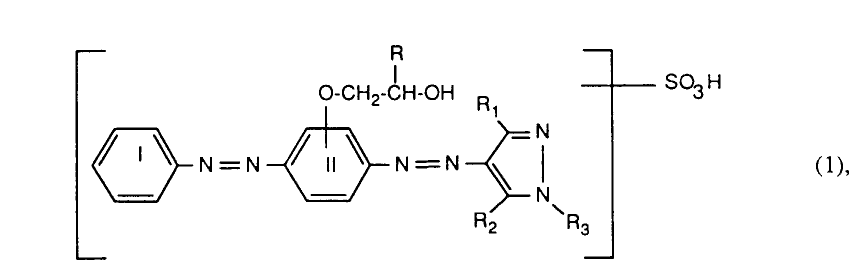 worin R, R₁ und R₂ unabhängig voneinander Wasserstoff, gegebenenfalls substituiertes C₁-C₈-Alkyl oder Phenyl sind, R₃ Wasserstoff oder gegebenenfalls substituiertes C₁-C₈-Alkyl, C₅-C₇-Cycloalkyl oder Phenyl ist und die Benzolringe I und II gegebenenfalls weitersubstituiert sind, zusammen mit mindestens einem rotfärbenden Farbstoff und mindestens einem blaufärbenden Farbstoff verwendet.

11. Verfahren gemäss Anspruch 10 zum Trichromie-Färben oder -Bedrucken, dadurch gekennzeichnet, dass man mindestens einen der rotfärbenden Farbstoffe der Formeln (9), (10) und (11): 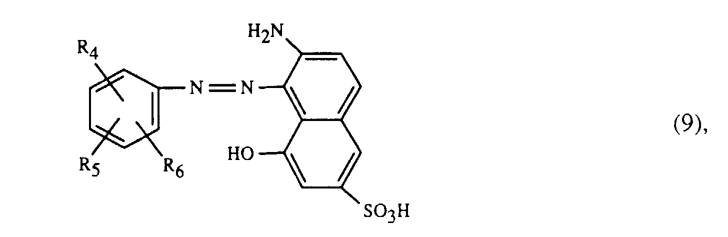 worin R₄ gegebenenfalls substituiertes C₁-C₈-Alkyl, Halogen, gegebenenfalls im Phenylring durch C₁-C₄-Alkyl substituiertes Phenylsulfonyl oder Phenoxysulfonyl, Cyclohexyloxycarbonylamino, C₂-C₄-Alkanoylannino, gegebenenfalls im Phenylring durch Halogen substituiertes Benzoylamino, 1-Azacycloheptan-N-sulfonyl oder 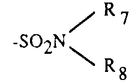 ist, wobei R₇ C₁-C₈-Alkyl oder gegebenenfalls durch C₁-C₄-Alkyl substituiertes Phenyl oder Cyclo hexyl und R₈ Wasserstoff oder C₁-C₈-Alkyl ist, R₅ Wasserstoff, Halogen, C₁-C₈-Alkyl oder C₂-C₄-Alkanoylamino und R₆ Wasserstoff oder Halogen ist, 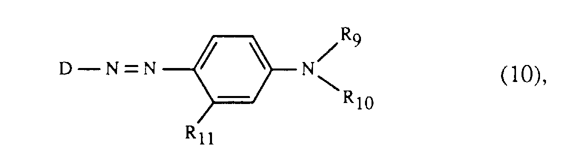 worin D gegebenenfalls substituiertes Phenyl, Thiophenyl oder Benzthiazolyl, R₉ C₁-C₈-Alkyl, R₁₀ gegebenenfalls substituiertes C₁-C₈-Alkyl und R₁₁ Wasserstoff oder C₁-C₄-Alkyl ist, und 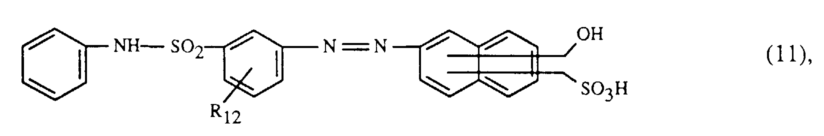 worin R₁₂ C₁-C₄-Alkyl ist, zusammen mit mindestens einem blaufärbenden Farbstoff der Formel 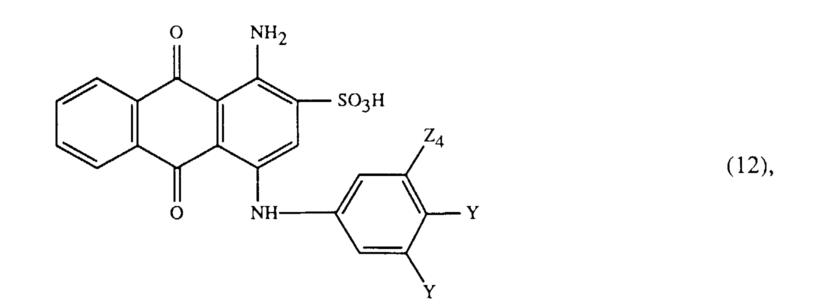 worin ein Y Wasserstoff oder Methyl und das andere Y C₂₋₄-Alkanoylamino oder C₂-C₄-Hydroxyalkylsulphamoyl bedeutet und Z₄ Wasserstoff oder Methyl ist, verwendet.

12. Verfahren gemäss einem der Ansprüche 10 und 11 zum Trichromie-Färben oder -Bedrucken, dadurch gekennzeichnet, dass man mindestens einen der rotfärbenden Farbstoffe der Formeln 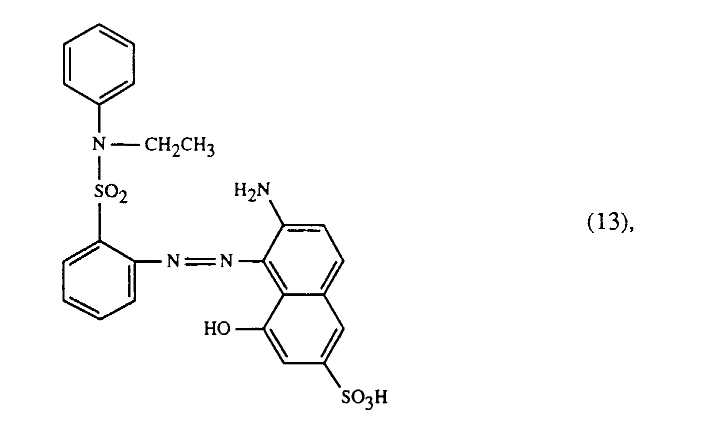 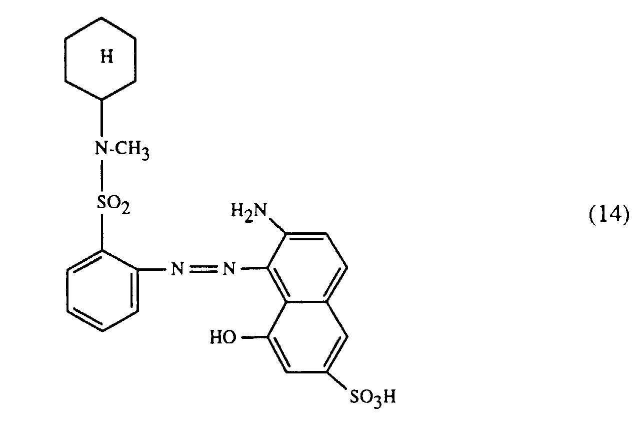 und 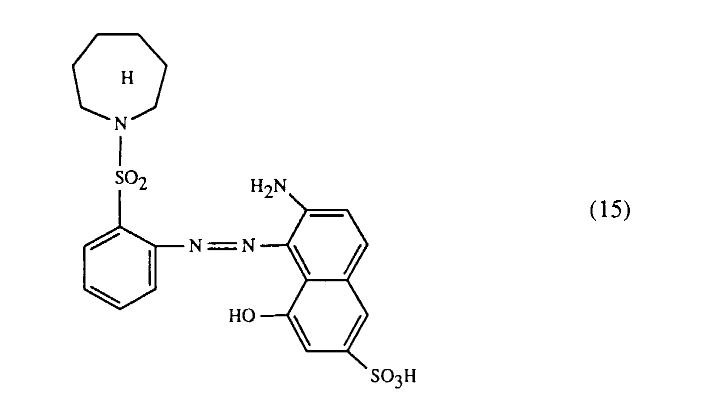 zusammen mit mindestens einem der blaufärbenden Farbstoffe der Formeln 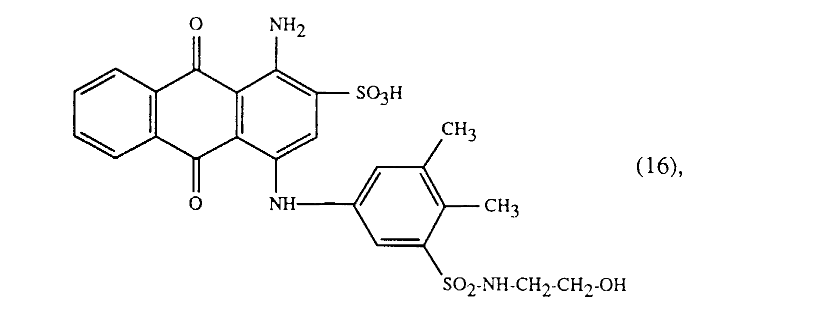 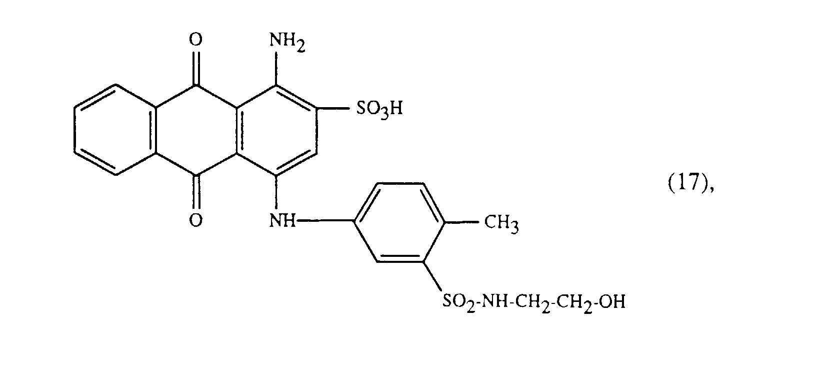 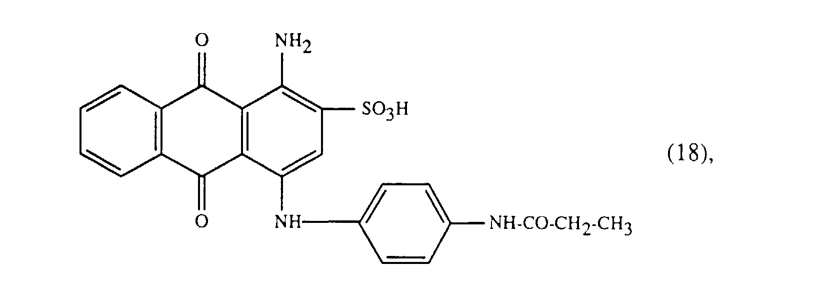 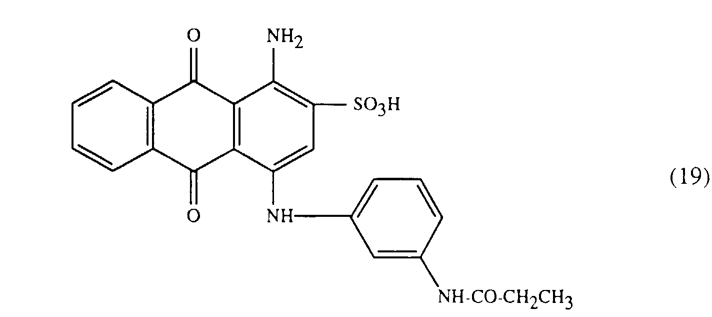 und 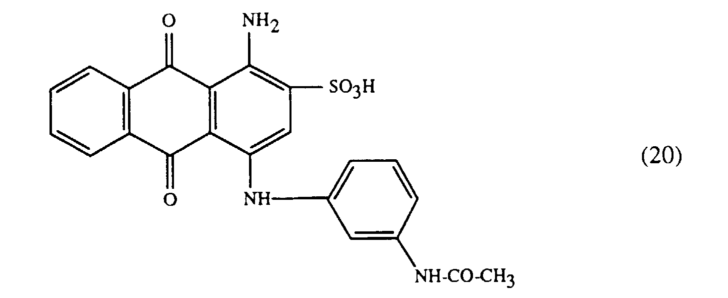 verwendet.

13. Verwendung der Azofarbstoffe gemäss den Ansprüchen 1 bis 8 bzw. der gemäss Anspruch 9 erhaltenen Azofarbstoffe zum Färben oder Bedrucken von natürlichen und synthetischen Polyamidfasermaterialien.

14. Das nach dem Verfahren gemäss Anspruch 10 gefärbte oder bedruckte Polyamidfasermaterial, insbesondere Polyamid-Teppiche.

## Patentansprüche (Patentansprüche für folgende(n) Vertragsstaat(en): ES)

1. Verfahren zur Herstellung von Azofarbstoffen der Formel 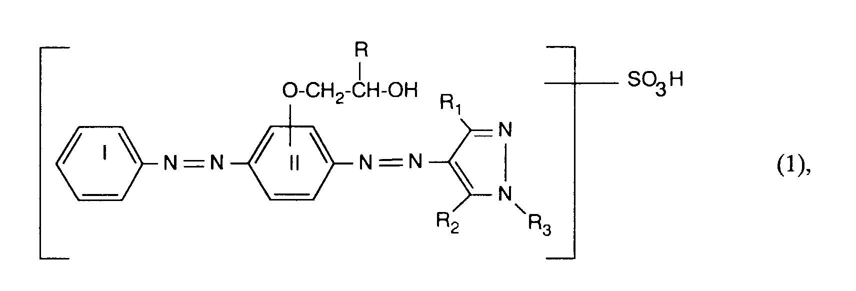 worin R, R₁ und R₂ unabhängig voneinander Wasserstoff, gegebenenfalls substituiertes C₁-C₈-Alkyl oder Phenyl sind, R₃ Wasserstoff oder gegebenenfalls substituiertes C₁-C₈-Alkyl, C₅-C₇-Cycloalkyl oder Phenyl ist und die Benzolringe I und II gegebenenfalls weitersubstituiert sind,
dadurch gekennzeichnet, dass man ein Amin der Formel 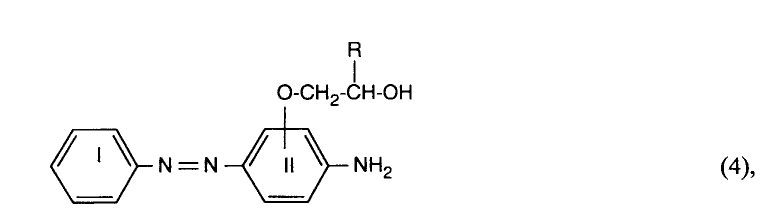 worin R die oben unter Formel (1) angegebenen Bedeutungen hat und die Benzolringe I und II gegebenenfalls substituiert sind, diazotiert und auf eine Kupplungskomponente der Formel 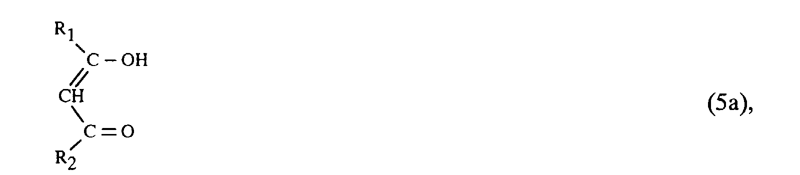 worin R₁ und R₂ unabhängig voneinander gegebenenfalls substituiertes C₁-C₈-Alkyl oder Phenyl sind,
oder auf eine Kupplungskomponente der Formel 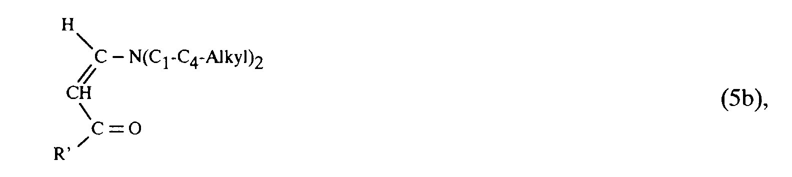 worin R' die oben unter Formel (1) für R₁ und R₂ angegebenen Bedeutungen hat, kuppelt und das Reaktionsprodukt der Formel 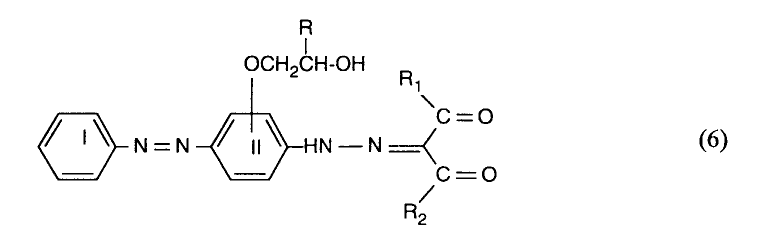 mit einem Hydrazin der Formel
H₂N-NH-R₃ (7),
worin R₃ die oben unter Formel (1) angegebenen Bedeutungen hat, umsetzt, wobei das Amin der Formel (4), die umgesetzte Kupplungskomponente der Formel (5a) oder (5b) und das Hydrazin der Formel (7) zusammen mindestens eine Sulfogruppe enthalten.

2. Verfahren gemäss Anspruch 1, dadurch gekennzeichnet, dass R Wasserstoff oder gegebenenfalls durch Hydroxy substituiertes C₁-C₄-Alkyl, insbesondere Methyl oder Aethyl, ist.

3. Verfahren gemäss einem der Ansprüche 1 und 2, dadurch gekennzeichnet, dass R₁ und R₂ unabhängig voneinander Wasserstoff, Phenyl oder C₁-C₄-Alkyl, insbesondere Methyl oder Aethyl, sind.

4. Verfahren gemäss einem der Ansprüche 1 bis 3, dadurch gekennzeichnet, dass R₃ Wasserstoff, C₁-C₄-Alkyl oder Phenyl ist.

5. Verfahren gemäss einem der Ansprüche 1 bis 4, dadurch gekennzeichnet, dass die Benzolringe I und II unabhängig voneinander gegebenenfalls durch C₁-C₄-Alkyl, C₁-C₄-Alkoxy, C₂-C₄-Alkanoylamino oder Halogen weitersubstituiert sind.

6. Verfahren gemäss einem der Ansprüche 1 bis 5, dadurch gekennzeichnet, dass die Sulfogruppe an den Benzolring I gebunden ist.

7. Verfahren gemäss einem der Ansprüche 1 bis 6, dadurch gekennzeichnet, dass R Wasserstoff oder gegebenenfalls durch Hydroxy substituiertes C₁-C₄-Alkyl ist, R₁ und R₂ unabhängig voneinander Wasserstoff oder C₁-C₄-Alkyl sind, R₃ Wasserstoff, C₁-C₄-Alkyl oder Phenyl ist, die Benzolringe I und II unabhängig voneinander gegebenenfalls durch C₁-C₄-Alkyl, C₁-C₄-Alkoxy, C₂-C₄-Alkanoylamino oder Halogen weitersubstituiert sind und die Sulfogruppe an den Benzolring I gebunden ist.

8. Verfahren gemäss Anspruch 1 zur Herstellung von Azofarbstoffen der Formel 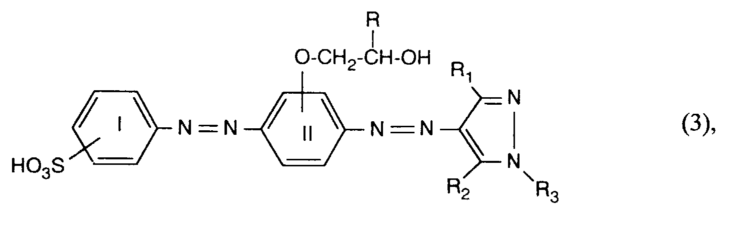 worin R Methyl oder Aethyl ist, R₁ und R₂ unabhängig voneinander Methyl oder Aethyl sind, R₃ Wasserstoff, Methyl, Aethyl oder Phenyl ist und die Benzolringe I und II unabhängig voneinander gegebenenfalls durch Methyl, Methoxy, Acetylamino oder Chlor weitersubstituiert sind.

9. Azofarbstoffe der Formel 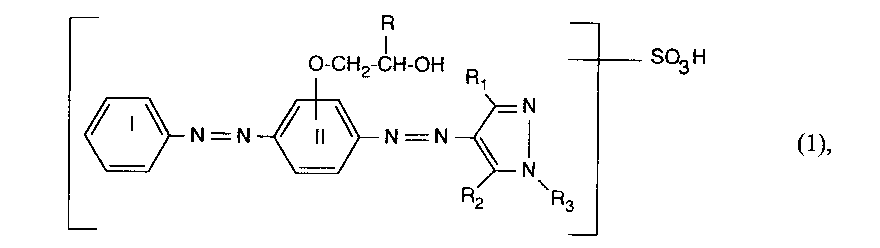 worin R, R₁ und R₂ unabhängig voneinander Wasserstoff, gegebenenfalls substituiertes C₁-C₈-Alkyl oder Phenyl sind, R₃ Wasserstoff oder gegebenenfalls substituiertes C₁-C₈-Alkyl, C₅-C₇-Cycloalkyl oder Phenyl ist und die Benzolringe I und II gegebenenfalls weitersubstituiert sind.

10. Verfahren zum Trichromie-Färben oder -Bedrucken von natürlichen und synthetischen Polyamidfasermaterialien mit Farbstoffmischungen, dadurch gekennzeichnet, dass man mindestens einen gelb- oder orangefärbenden Farbstoff der Formel 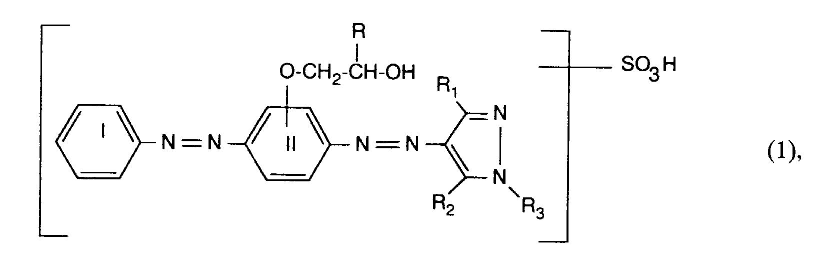 worin R, R₁ und R₂ unabhängig voneinander Wasserstoff, gegebenenfalls substituiertes C₁-C₈-Alkyl oder Phenyl sind, R₃ Wasserstoff oder gegebenenfalls substituiertes C₁-C₈-Alkyl, C₅-C₇-Cycloalkyl oder Phenyl ist und die Benzolringe I und II gegebenenfalls weitersubstituiert sind, zusammen mit mindestens einem rotfärbenden Farbstoff und mindestens einem blaufärbenden Farbstoff verwendet.

11. Verfahren gemäss Anspruch 10 zum Trichromie-Färben oder -Bedrucken, dadurch gekennzeichnet, dass man mindestens einen der rotfärbenden Farbstoffe der Formeln (9), (10) und (11): 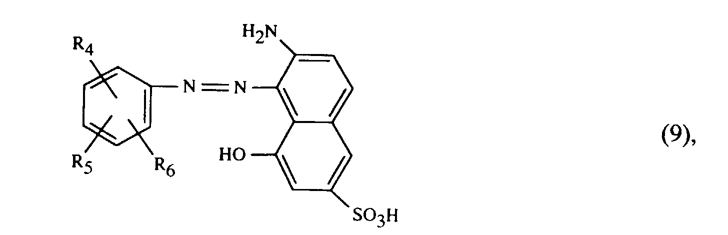 worin R₄ gegebenenfalls substituiertes C₁-C₈-Alkyl, Halogen, gegebenenfalls im Phenylring durch C₁-C₄-Alkyl substituiertes Phenylsulfonyl oder Phenoxysulfonyl, Cyclohexyloxycarbonylamino, C₂-C₄-Alkanoylamino, gegebenenfalls im Phenylring durch Halogen substituiertes Benzoylamino, 1-Azacycloheptan-N-sulfonyl oder 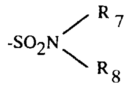 ist, wobei R₇ C₁-C₈-Alkyl oder gegebenenfalls durch C₁-C₄-Alkyl substituiertes Phenyl oder Cyclohexyl und R₈ Wasserstoff oder C₁-C₈-Alkyl ist, R₅ Wasserstoff, Halogen, C₁-C₈-Alkyl oder C₂-C₄-Alkanoylamino und R₆ Wasserstoff oder Halogen ist, 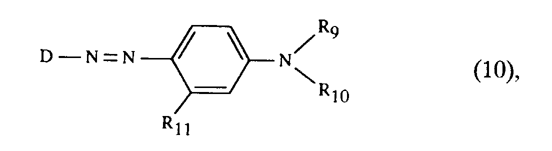 worin D gegebenenfalls substituiertes Phenyl, Thiophenyl oder Benzthiazolyl, R₉ C₁-C₈-Alkyl, R₁₀ gegebenenfalls substituiertes C₁-C₈-Alkyl und R₁₁ Wasserstoff oder C₁-C₄-Alkyl ist, und 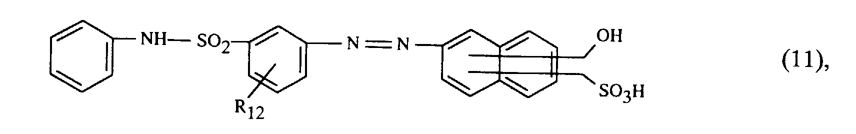 worin R₁₂ C₁-C₄-Alkyl ist, zusammen mit mindestens einem blaufärbenden Farbstoff der Formel 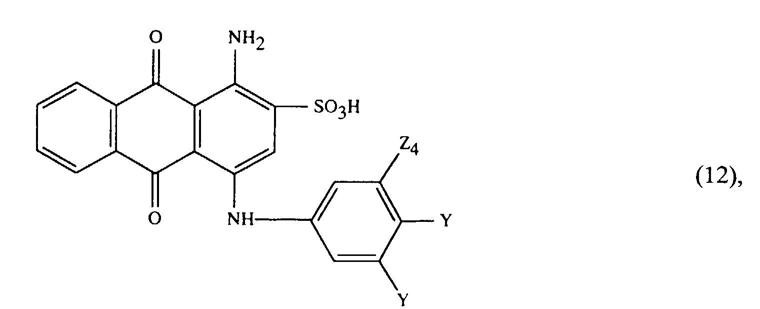 worin ein Y Wasserstoff oder Methyl und das andere Y C₂₋₄-Alkanoylamino oder C₂-C₄-Hydroxyalkylsulphamoyl bedeutet und Z₄ Wasserstoff oder Methyl ist, verwendet.

12. Verfahren gemäss einem der Ansprüche 10 und 11 zum Trichromie-Färben oder -Bedrucken, dadurch gekennzeichnet, dass man mindestens einen der rotfärbenden Farbstoffe der Formeln 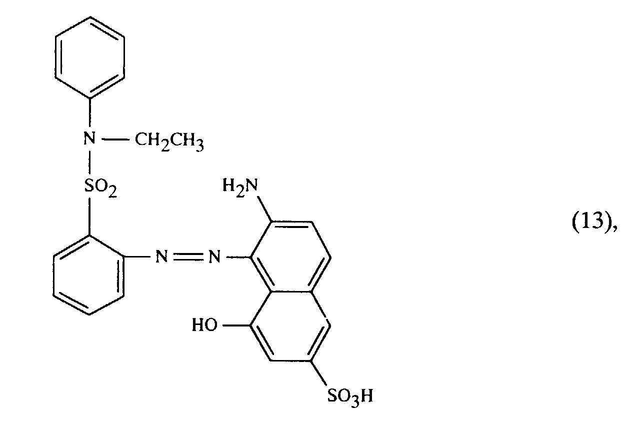 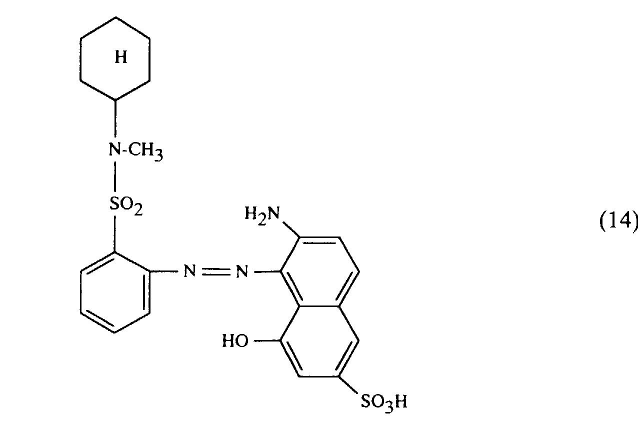 und 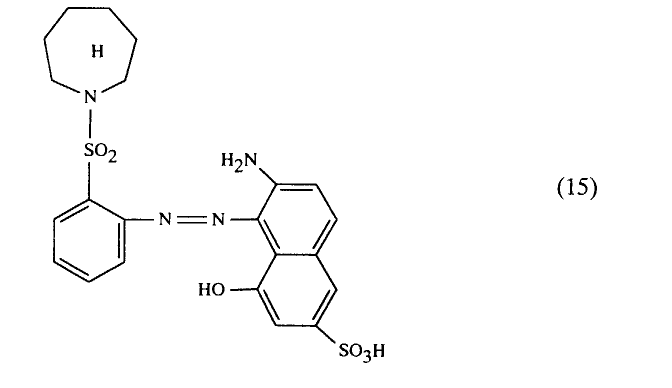 zusammen mit mindestens einem der blaufärbenden Farbstoffe der Formeln 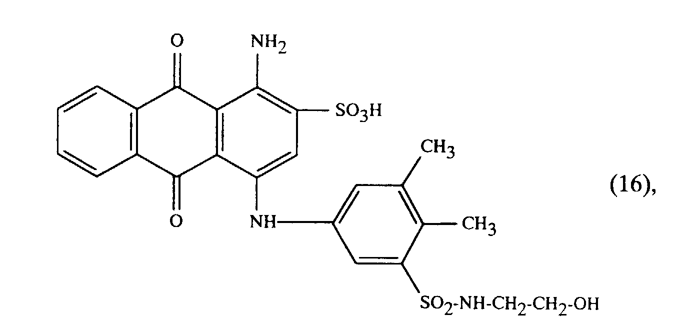 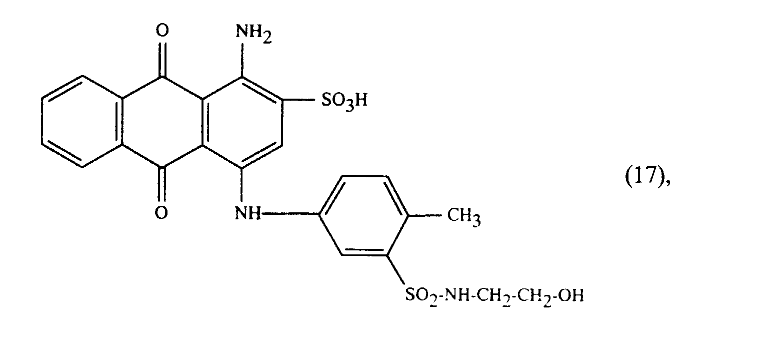 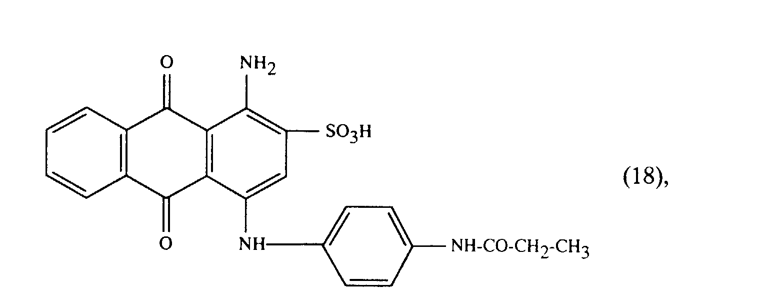 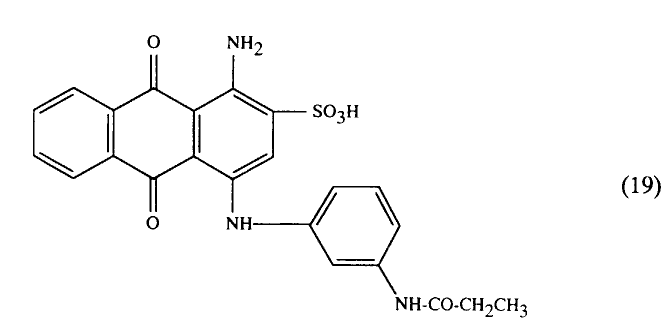 und 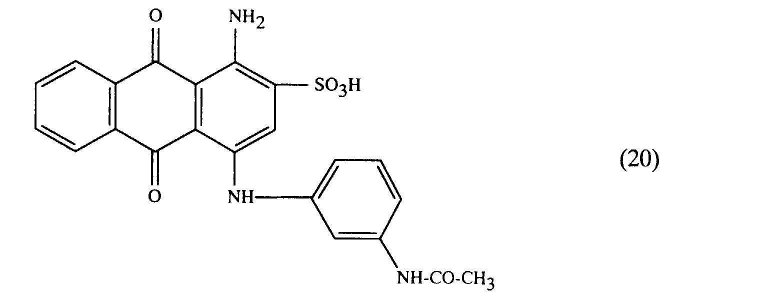 verwendet.

13. Verwendung der gemäss den Ansprüchen 1 bis 8 erhaltenen Azofarbstoffe bzw. der Azofarbstoffe gemäss Anspruch 9 zum Färben oder Bedrucken von natürlichen und synthetischen Polyamidfasermaterialien.

14. Das nach dem Verfahren gemäss Anspruch 10 gefärbte oder bedruckte Polyamidfasermaterial, insbesondere Polyamid-Teppiche.

## Claims (Claims for the following Contracting State(s): BE, CH, DE, FR, GB, IT, LI)

1. An azo dye of the formula 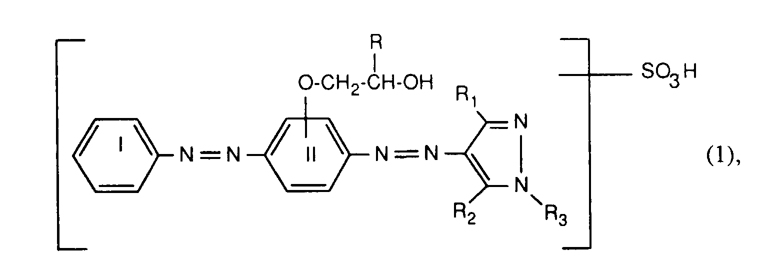 in which R, R₁ and R₂, independently of one another, are hydrogen, substituted or unsubstituted C₁-C₈alkyl or phenyl, R₃ is hydrogen or substituted or unsubstituted C₁-C₈alkyl, C₅-C₇cycloalkyl or phenyl and the benzene rings I and II may be further substituted.

2. An azo dye according to claim 1, wherein R is hydrogen or unsubstituted or hydroxyl-substituted C₁-C₄alkyl, in particular methyl or ethyl.

3. An azo dye according to any one of claims 1 and 2, wherein R₁ and R₂, independently of one another, are hydrogen, phenyl or C₁-C₄alkyl, in particular methyl or ethyl.

4. An azo dye according to any one of claims 1 to 3, wherein R₃ is hydrogen, C₁-C₄alkyl or phenyl.

5. An azo dye according to any one of claims 1 to 4, wherein the benzene rings I and II, independently of one another, may be further substituted by C₁-C₄alkyl, C₁-C₄alkoxy, C₂-C₄alkanoylamino or halogen.

6. An azo dye according to any one of claims 1 to 5, wherein the sulfo group is bound to the benzene ring I.

7. An azo dye according to any one of claims 1 to 6, wherein R is hydrogen or unsubstituted or hydroxyl-substituted C₁-C₄alkyl, R₁ and R₂, independently of one another, are hydrogen or C₁-C₄alkyl, R₃ is hydrogen, C₁-C₄alkyl or phenyl, the benzene rings I and II, independently of one another, may be further substituted by C₁-C₄alkyl, C₁-C₄alkoxy, C₂-C₄alkanoylamino or halogen, and the sulfo group is bound to the benzene ring I.

8. An azo dye according to claim 1 of the formula 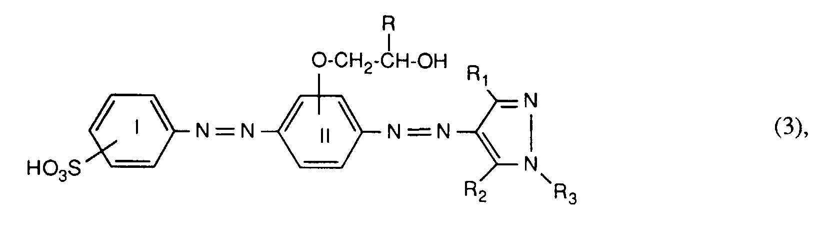 in which R is methyl or ethyl, R₁ and R₂, independently of one another, are methyl or ethyl, R₃ is hydrogen, methyl, ethyl or phenyl and the benzene rings I and II, independently of one another, may be further substituted by methyl, methoxy, acetylamino or chlorine.

9. A process for the preparation of an azo dye according to claim 1, which comprises diazotising an amine of the formula 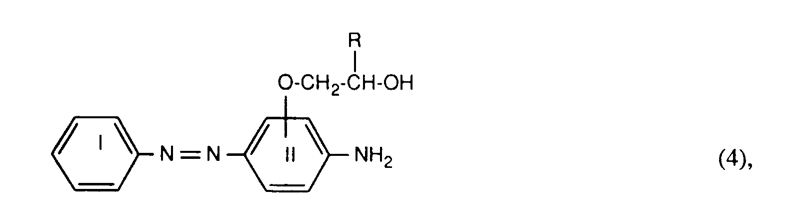 in which R is as defined in claim 1 and the benzene rings I and II may be substituted, and coupling the product onto a coupling component of the formula 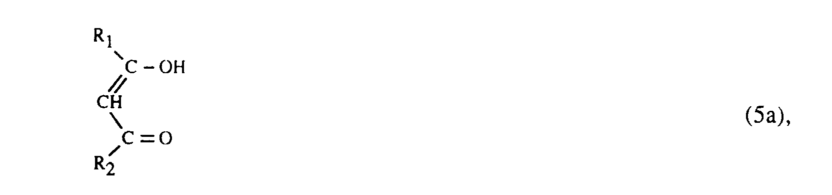 in which R₁ and R₂, independently of one another, are substituted or unsubstituted C₁-C₈alkyl or phenyl,
or onto a coupling component of the formula 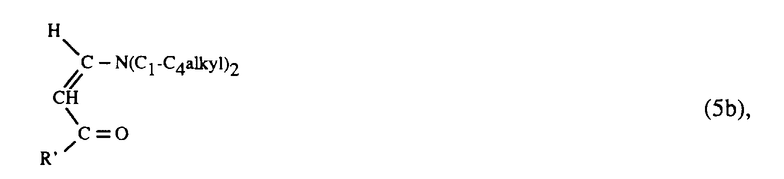 in which R' has the meanings given for R₁ and R₂ in claim 1, and reacting the reaction product of the formula 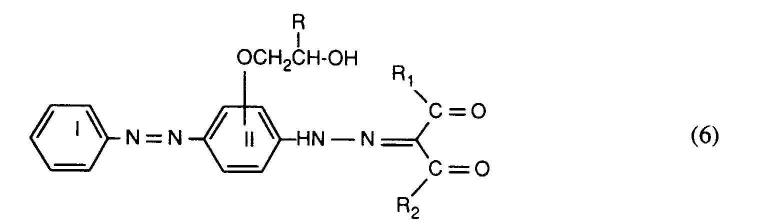 with a hydrazine of the formula
H₂N-NH-R₃ (7),
in which R₃ is as defined in claim 1, the amine of the formula (4), the reacted coupling component of the formula (5a) or (5b) and the hydrazine of the formula (7) together containing at least one sulfo group.

10. A process for the trichromatic dyeing or printing of natural and synthetic polyamide fibre materials using dye mixtures, wherein at least one yellow- or orange-dyeing dye of the formula 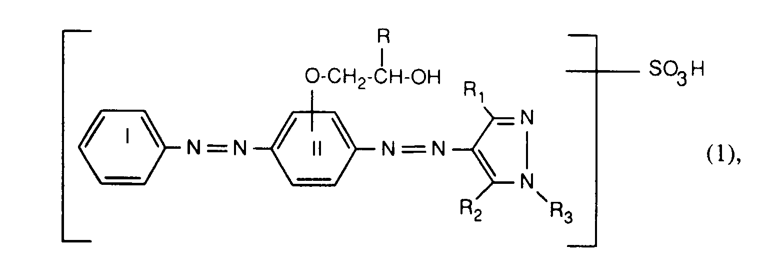 in which R, R₁ and R₂, independently of one another, are hydrogen, substituted or unsubstituted C₁-C₈alkyl or phenyl, R₃ is hydrogen or substituted or unsubstituted C₁-C₈alkyl, C₅-C₇cycloalkyl or phenyl, and the benzene rings I and II may be further substituted, is used together with at least one red-dyeing dye and at least one blue-dyeing dye.

11. A process according to claim 10 for trichromatic dyeing or printing, wherein at least one of the red-dyeing dyes of the formulae (9), (10) and (11): 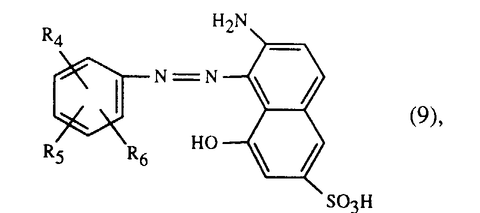 in which R₄ is substituted or unsubstituted C₁-C₈alkyl, halogen, phenylsulfonyl or phenoxysulfonyl which is unsubstituted or substituted in the phenyl ring by C₁-C₄alkyl, or is cyclohexyloxycarbonylamino, C₂-C₄alkanoylamino, benzoylamino which is unsubstituted or substituted in the phenyl ring bv halogen, or is 1-azacycloheptane-N-sulfonyl or 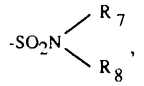 in which R₇ is C₁-C₈alkyl or unsubstituted or C₁-C₄alkyl-substituted phenyl or cyclohexyl and R₈ is hydrogen or C₁-C₈alkyl, R₅ is hydrogen, halogen, C₁-C₈alkyl or C₂-C₄alkanoylamino and R₆ is hydrogen or halogen, 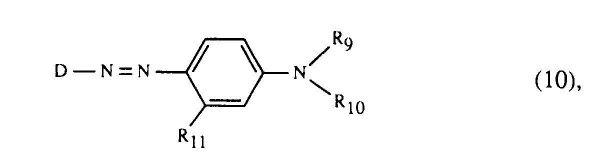 in which D is substituted or unsubstituted phenyl, thiophenyl or benzothiazolyl, R₉ is C₁-C₈alkyl, R₁₀ is substituted or unsubstituted C₁-C₈alkyl and R₁₁ is hydrogen or C₁-C₄alkyl, and 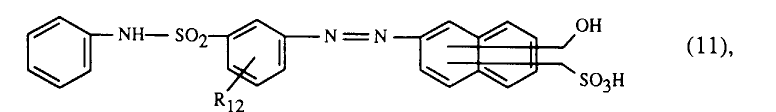 in which R₁₂ is C₁-C₄alkyl, is used together with at least one blue-dyeing dye of the formula 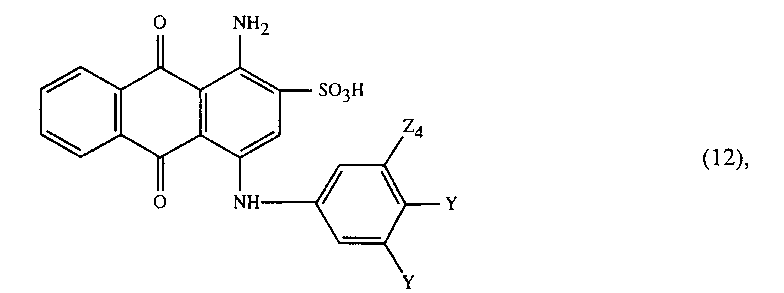 in which one Y is hydrogen or methyl and the other Y is C₂₋₄alkanoylamino or C₂-C₄hydroxyalkylsulfamoyl, and Z₄ is hydrogen or methyl.

12. A process according to any one of claims 10 and 11 for trichromatic dyeing or printing, wherein at least one of the red-dyeing dyes of the formulae 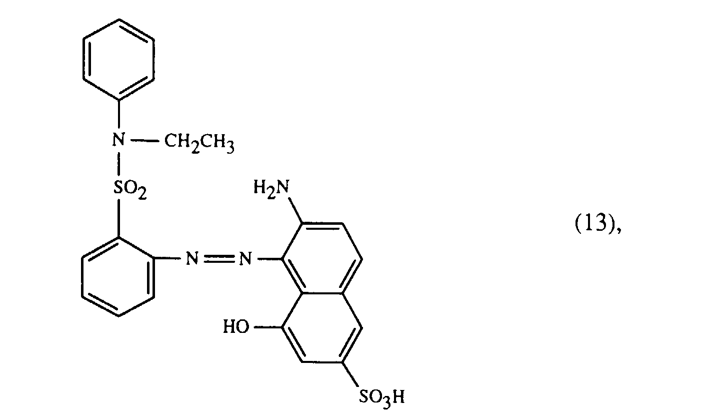 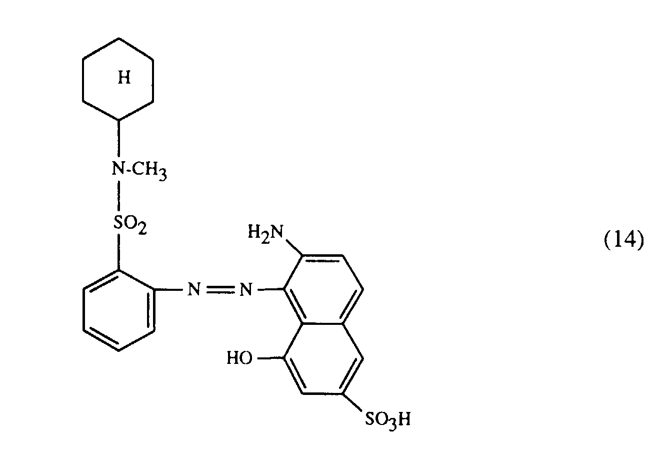 and 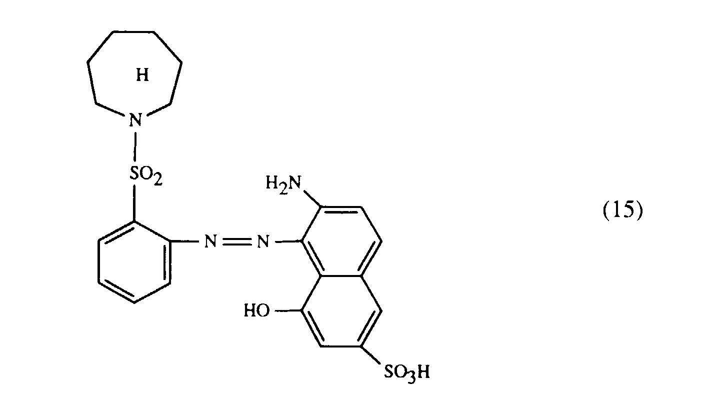 is used together with at least one of the blue-dyeing dyes of the formulae 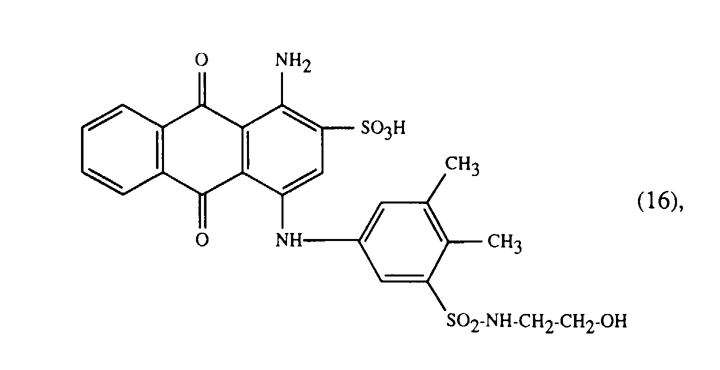 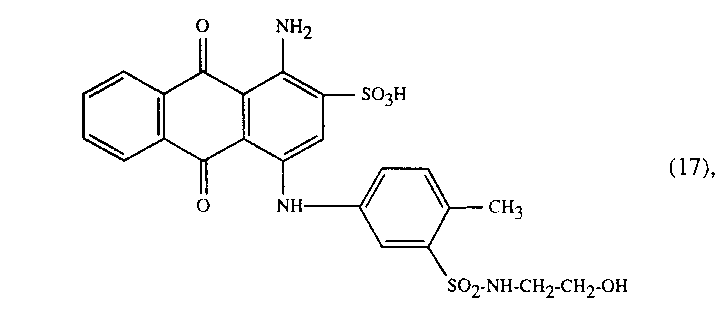 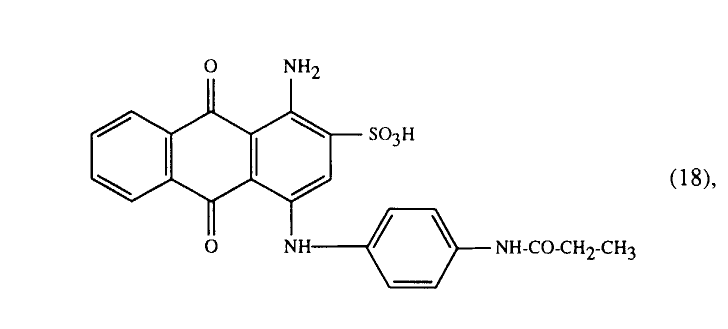 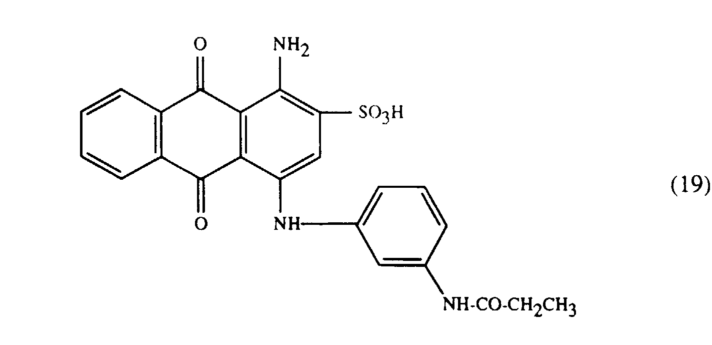 and

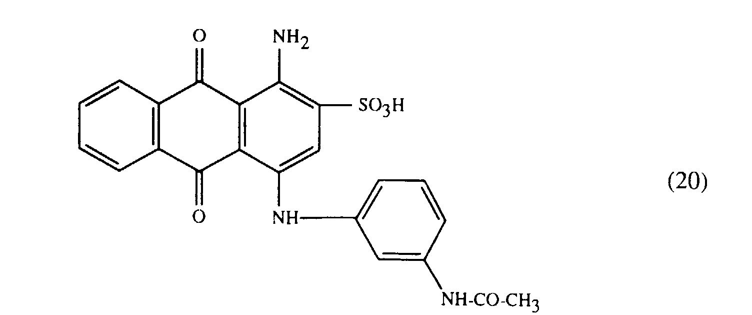

13. The use of an azo dye according to claims 1 to 8 or of an azo dye obtained according to claim 9 for the dyeing or printing of natural and synthetic polyamide fibre materials.

14. A polyamide fibre material, in particular a polyamide carpet, dyed or printed by the process according to claim 10.

## Claims (Claims for the following Contracting State(s): ES)

1. A process for the preparation of an azo dye of the formula 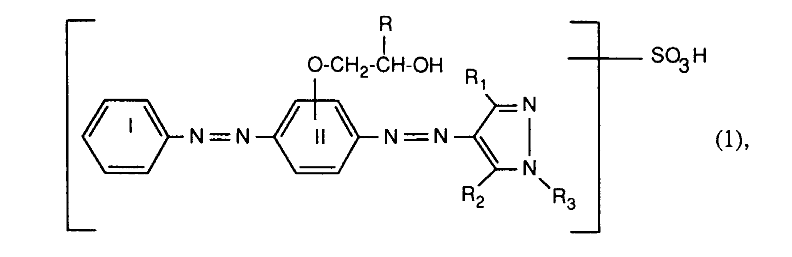 in which R, R₁ and R₂, independently of one another, are hydrogen, substituted or unsubstituted C₁-C₈alkyl or phenyl, R₃ is hydrogen or substituted or unsubstituted C₁-C₈alkyl, C₅-C₇cycloalkyl or phenyl and the benzene rings I and II may be further substituted, which comprises diazotising an amine of the formula 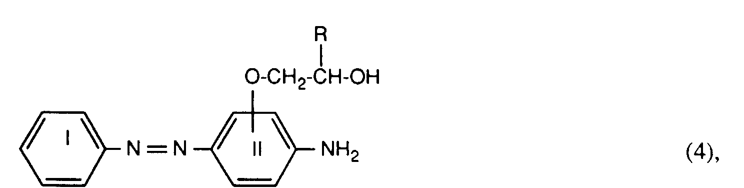 in which R is as defined above under formula (1) and the benzene rings I and II may be substituted, and coupling the product onto a coupling component of the formula 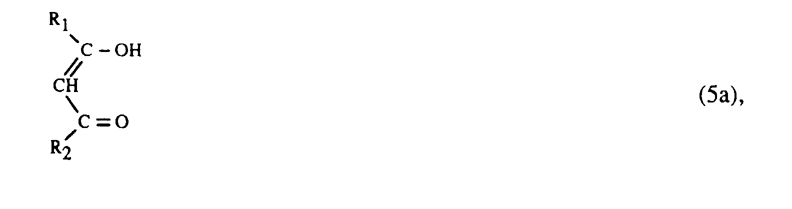 in which R₁ and R₂, independently of one another, are substituted or unsubstituted C₁-C₈alkyl or phenyl,
or onto a coupling component of the formula 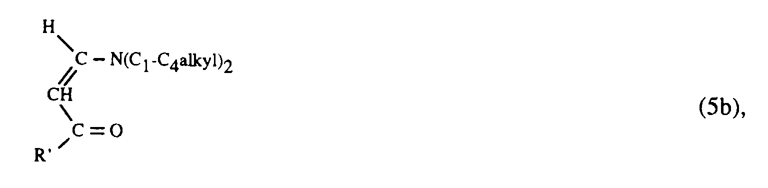 in which R' has the meanings given for R₁ and R₂ above under formula (1), and reacting the reaction product of the formula 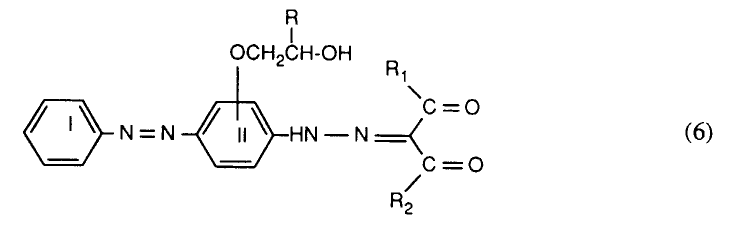 with a hydrazine of the formula
H₂N-NH-R₃ (7),
in which R₃ is as defined above under formula (1), the amine of the formula (4), the reacted coupling component of the formula (5a) or (5b) and the hydrazine of the formula (7) together containing at least one sulfo group.

2. A process according to claim 1, wherein R is hydrogen or unsubstituted or hydroxyl-substituted C₁-C₄alkyl, in particular methyl or ethyl.

3. A process according to any one of claims 1 and 2, wherein R₁ and R₂, independently of one another, are hydrogen, phenyl or C₁-C₄alkyl, in particular methyl or ethyl.

4. A process according to any one of claims 1 to 3, wherein R₃ is hydrogen, C₁-C₄alkyl or phenyl.

5. A process according to any one of claims 1 to 4, wherein the benzene rings I and II, independently of one another, may be further substituted by C₁-C₄alkyl, C₁-C₄alkoxy, C₂-C₄alkanoylamino or halogen.

6. A process according to any one of claims 1 to 5, wherein the sulfo group is bound to the benzene ring I.

7. A process according to any one of claims 1 to 6, wherein R is hydrogen or unsubstituted or hydroxyl-substituted C₁-C₄alkyl, R₁ and R₂, independently of one another, are hydrogen or C₁-C₄alkyl, R₃ is hydrogen, C₁-C₄alkyl or phenyl, the benzene rings I and II, independently of one another, may be further substituted by C₁-C₄alkyl, C₁-C₄alkoxy, C₂-C₄alkanoylamino or halogen, and the sulfo group is bound to the benzene ring I.

8. A process according to claim 1 for the preparation of an azo dye of the formula 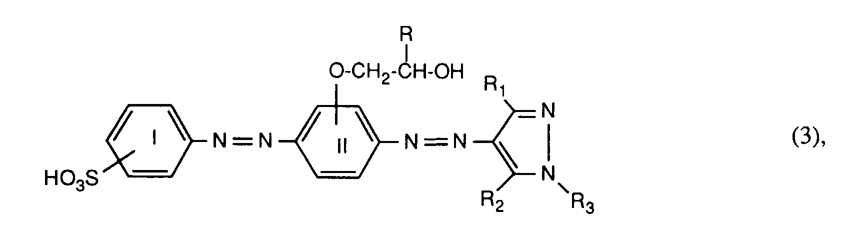 in which R is methyl or ethyl, R₁ and R₂, independently of one another, are methyl or ethyl, R₃ is hydrogen, methyl, ethyl or phenyl and the benzene rings I and II, independently of one another, may be further substituted by methyl, methoxy, acetylamino or chlorine.

9. An azo dye of the formula 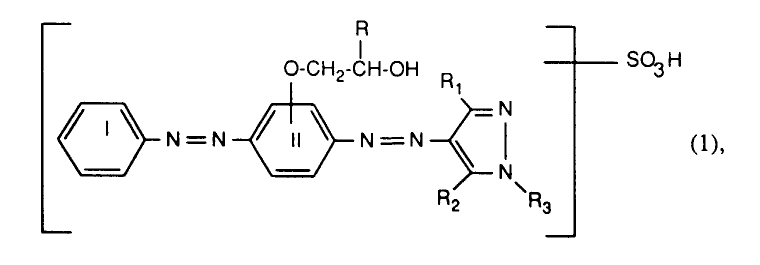 in which R, R₁ and R₂, independently of one another, are hydrogen, substituted or unsubstituted C₁-C₈alkyl or phenyl, R₃ is hydrogen or substituted or unsubstituted C₁-C₈alkyl, C₅-C₇cycloalkyl or phenyl and the benzene rings I and II may be further substituted.

10. A process for the trichromatic dyeing or printing of natural and synthetic polyamide fibre materials using dye mixtures, wherein at least one yellow- or orange-dyeing dye of the formula 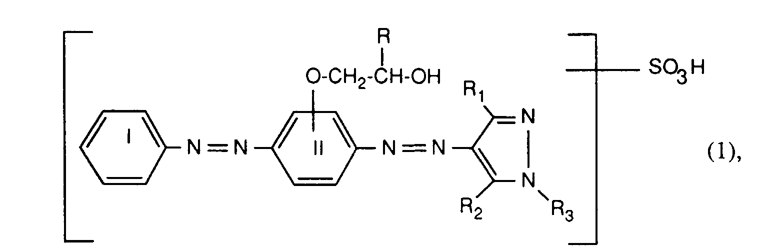 in which R, R₁ and R₂, independently of one another, are hydrogen, substituted or unsubstituted C₁-C₈alkyl or phenyl, R₃ is hydrogen or substituted or unsubstituted C₁-C₈alkyl, C₅-C₇cycloalkyl or phenyl, and the benzene rings I and II may be further substituted, is used together with at least one red-dyeing dye and at least one blue-dyeing dye.

11. A process according to claim 10 for trichromatic dyeing or printing, wherein at least one of the red-dyeing dyes of the formulae (9), (10) and (11): 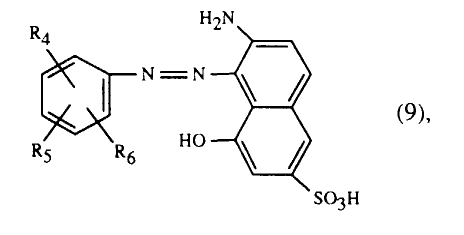 in which R₄ is substituted or unsubstituted C₁-C₈alkyl, halogen, phenylsulfonyl or phenoxysulfonyl which is unsubstituted or substituted in the phenyl ring by C₁-C₄alkyl, or is cyclohexyloxycarbonylamino, C₂-C₄alkanoylamino, benzoylamino which is unsubstituted or substituted in the phenyl ring by halogen, or is 1-azacycloheptane-N-sulfonyl or 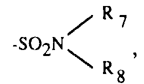 in which R₇ is C₁-C₈alkyl or unsubstituted or C₁-C₄alkyl-substituted phenyl or cyclohexyl and R₈ is hydrogen or C₁-C₈alkyl, R₅ is hydrogen, halogen, C₁-C₈alkyl or C₂-C₄alkanoylamino and R₆ is hydrogen or halogen, 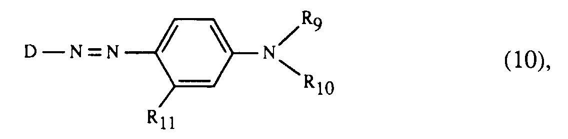 in which D is substituted or unsubstituted phenyl, thiophenyl or benzothiazolyl, R₉ is C₁-C₈alkyl, R₁₀ is substituted or unsubstituted C₁-C₈alkyl and R₁₁ is hydrogen or C₁-C₄alkyl, and 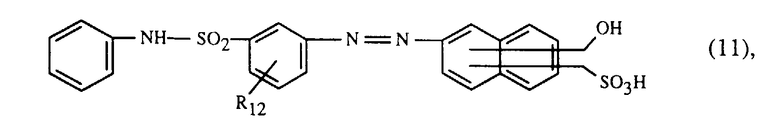 in which R₁₂ is C₁-C₄alkyl, is used together with at least one blue-dyeing dye of the formula 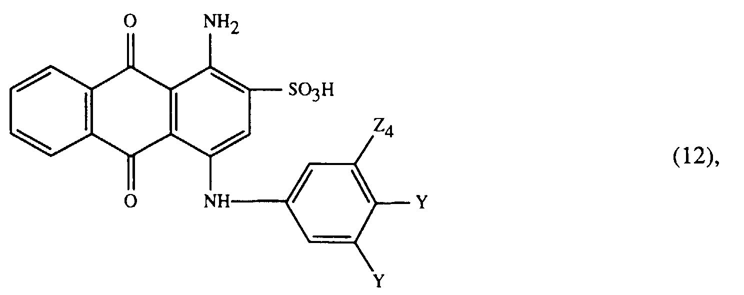 in which one Y is hydrogen or methyl and the other Y is C₂₋₄alkanoylamino or C₂-C₄hydroxyalkylsulfamoyl, and Z₄ is hydrogen or methyl.

12. A process according to any one of claims 10 and 11 for trichromatic dyeing or printing, wherein at least one of the red-dyeing dyes of the formulae 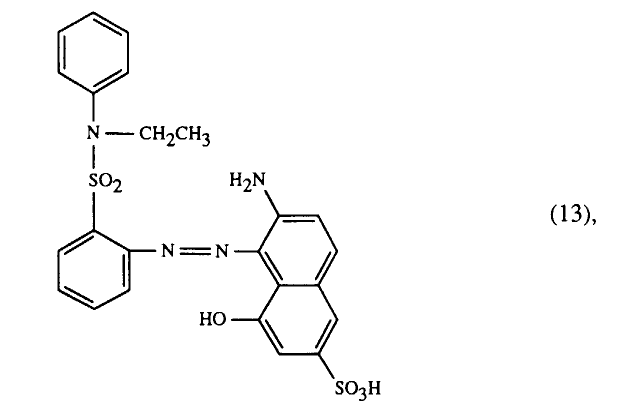 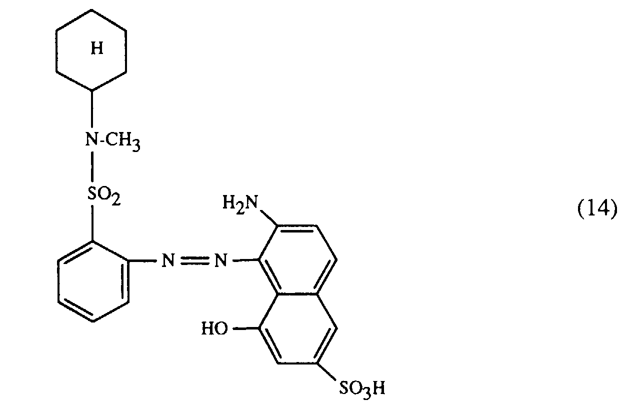 and 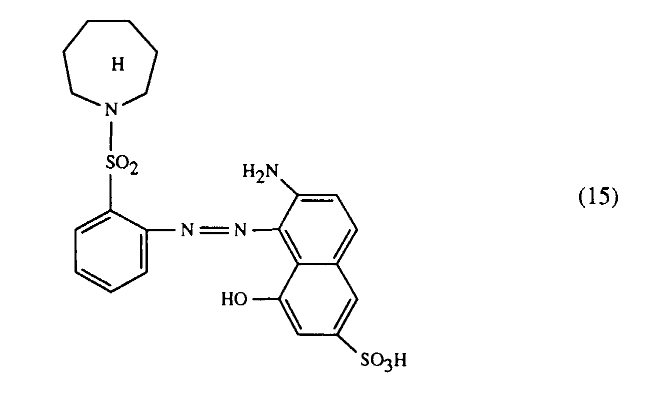 is used together with at least one of the blue-dyeing dyes of the formulae 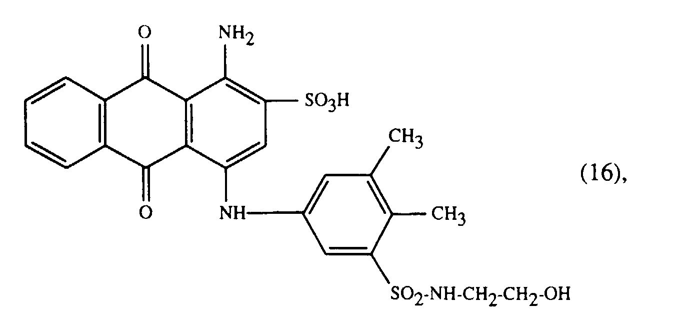 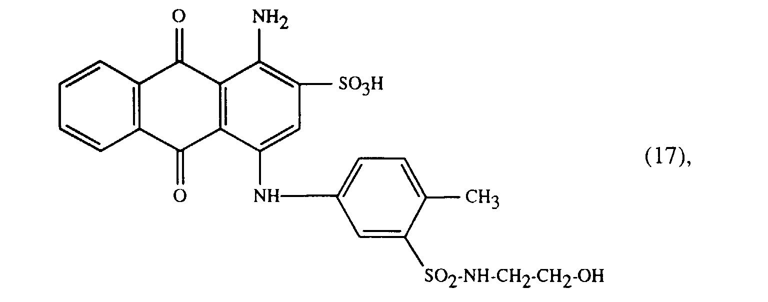 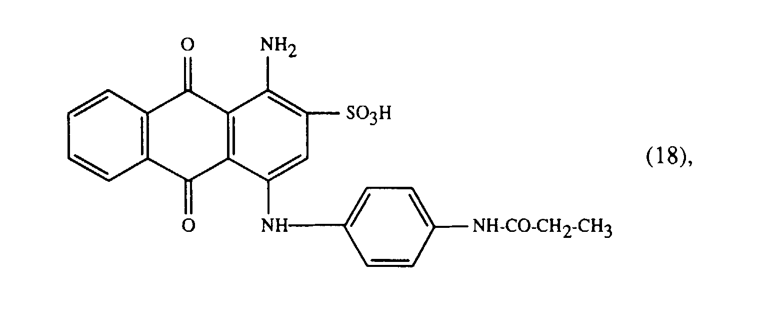 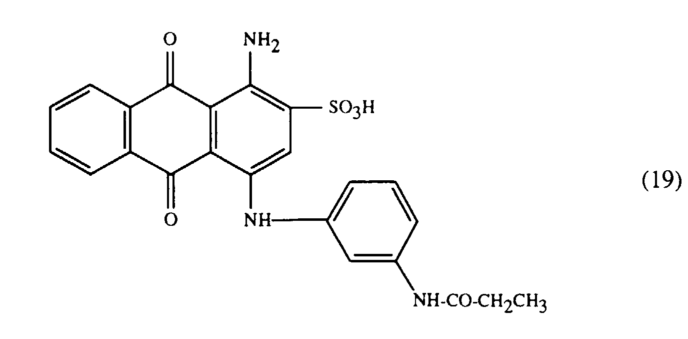 and

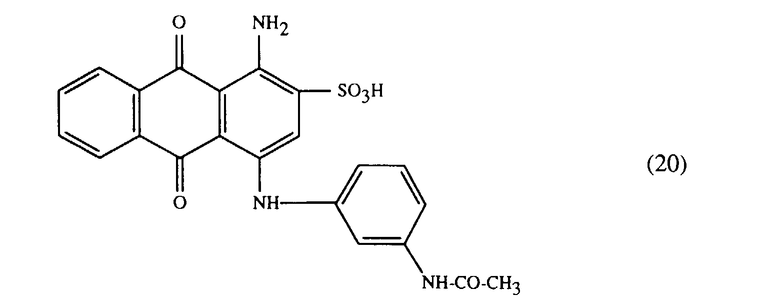

13. The use of an azo dye obtained according to claims 1 to 8 or of an azo dye according to claim 9 for the dyeing or printing of natural and synthetic polyamide fibre materials.

14. A polyamide fibre material, in particular a polyamide carpet, dyed or printed by the process according to claim 10.

## Revendications (Revendications pour l'(les) Etat(s) contractant(s) suivant(s): BE, CH, DE, FR, GB, IT, LI)

1. Colorants azoïques de formule 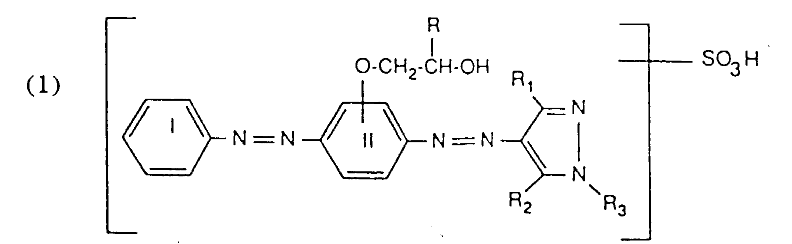 dans laquelle R, R₁ et R₂ représentent, indépendamment l'un de l'autre, un atome d'hydrogène, un résidu alkyle en C₁₋₈ ou phényle éventuellement substitués, R₃ représente un atome d'hydrogène ou un résidu alkyle en C₁₋ ₈, cycloalkyle en C₅₋₇ ou phényle éventuellement substitués et les noyaux benzéniques I et II peuvent porter d'autres substituants.

2. Colorants azoïques selon la revendication 1, caractérisés en ce que R représente un atome d'hydrogène ou un groupe alkyle en C₁₋₄ éventuellement hydroxylé, en particulier un groupe méthyle ou éthyle.

3. Colorants azoïques selon une des revendications 1 et 2, caractérisés en ce que R₁ et R₂ représentent, indépendamment l'un de l'autre, un atome d'hydrogène ou un groupe phényle ou alkyle en C₁₋₄ , en particulier un groupe méthyle ou éthyle.

4. Colorants azoïques selon l'une quelconque des revendications 1 à 3, caractérisés en ce que R₃ représente un atome d'hydrogène, un groupe alkyle en C₁₋₄ ou phényle.

5. Colorants azoïques selon l'une quelconque des revendications 1 à 4, caractérisés en ce que les noyaux benzéniques I et II peuvent porter indépendamment un ou plusieurs autres substituants alkyle en C₁₋₄, alcoxy en C₁₋₄, alcanoylamino en C₂₋₄ ou halogéno.

6. Colorants azoïques selon l'une quelconque des revendications 1 à 5, caractérisés en ce que le groupe sulfo est porté par le noyau benzénique I.

7. Colorants azoïques selon l'une quelconque des revendications 1 à 6, caractérisés en ce que R représente un atome d'hydrogène ou un groupe alkyle en C₁₋₄ éventuellement hydroxylé, R₁ et R₂ représentent indépendamment l'un de l'autre un atome d'hydrogène ou un groupe alkyle en C₁₋₄, R₃ représente un atome d'hydrogène, un groupe alkyle en C₁₋₄ ou phényle, les noyaux benzéniques I et II peuvent porter, indépendamment l'un de l'autre, un ou plusieurs sustituants alkyle en C₁₋₄, alcoxy en C₁₋₄, alcanoylamino en C₂₋₄ ou halogéno et le groupe sulfo est porté par le noyau benzénique I.

8. Colorants azoïques selon la revendication 1, correspondant à la formule 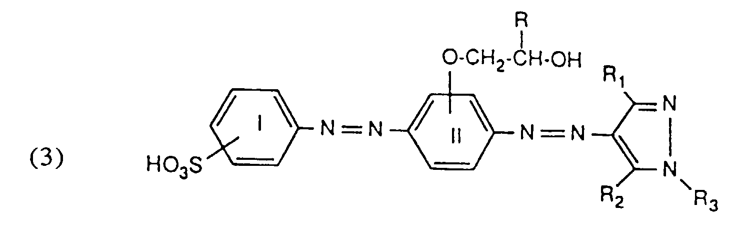 dans laquelle R représente un groupe méthyle ou éthyle, R₁ et R₂ représentent indépendamment l'un de l'autre un groupe méthyle ou éthyle, R₃ représente un atome d'hydrogène, un groupe méthyle, éthyle ou phényle et les noyaux benzéniques I et II sont éventuellement substitués indépendamment l'un de l'autre, par un ou plusieurs groupes méthyle, méthoxy, acétylamino ou chloro.

9. Procédé de préparation de colorants azoïques selon la revendication 1, caractérisé par le fait que l'on procède à la diazotation d'une amine de formule 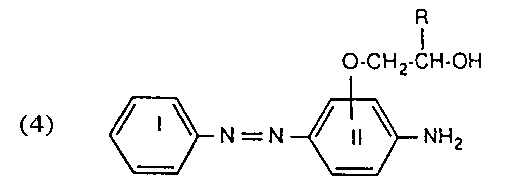 dans laquelle R a la signification indiquée dans la revendication 1 et dans laquelle les noyaux benzéniques I et II sont éventuellement substitués, en ce que l'on copule l'amine diazotée avec un copulant de formule 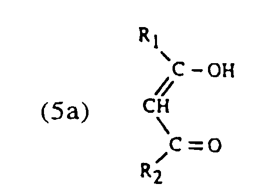 dans laquelle R₁ et R₂ représentent, indépendamment l'un de l'autre, un groupe alkyle en C₁₋₈ ou phényle éventuellement substitués, ou avec un copulant de formule 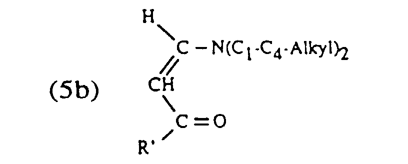 dans laquelle R' a la signification indiquée pour R₁ et R₂ dans la revendication 1, et en ce que l'on fait réagir le produit réactionnel de formule 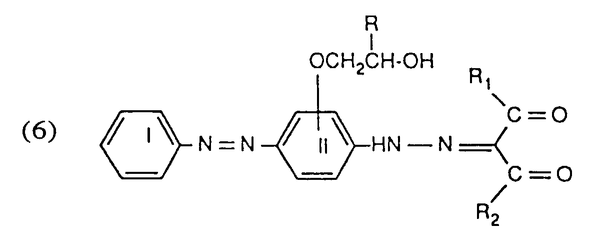 avec une hydrazine de formule
(7) H₂N-NH-R₃
dans laquelle R₃ a la signification indiquée dans la revendication 1, l'amine de formule (4), le copulant de formule (5a) ou (5b) et l'hydrazine de formule (7) contenant ensemble au moins un groupe sulfo.

10. Procédé de teinture ou d'impression en trichromie de matériaux fibreux en polyamide synthétique ou naturel avec des mélanges de colorants, caractérisé en ce que l'on utilise au moins un colorant jaune ou orange de formule 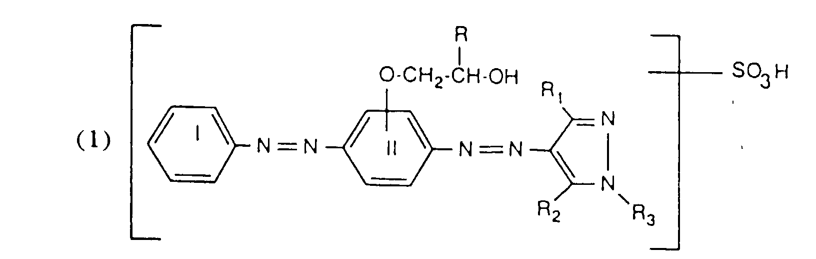 dans laquelle R, R₁ et R₂ représentent, indépendamment l'un de l'autre, un atome d'hydrogène, un groupe alkyle en C₁₋₈ ou phényle éventuellement substitués, R₃ représente un atome d'hydrogène ou un groupe alkyle en C₁₋₈, cycloalkyle en C₅₋₇ ou phényle éventuellement substitués, et les noyaux benzéniques I et II peuvent porter d'autres substituants, en conjonction avec au moins un colorant rouge et au moins un colorant bleu.

11. Procédé selon à la revendication 10 pour la teinture ou l'impression en trichromie, caractérisé en ce que l'on utilise au moins un des colorants rouges de formule (9), (10) et (11) : 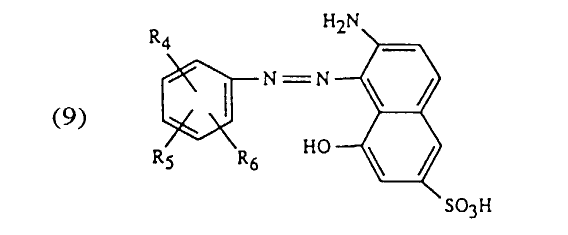 dans laquelle R₄ représente un groupe alkyle en C₁₋₈ éventuellement substitué, un atome d'halogène, un groupe phénylsulfonyle ou phénoxysulfonyle dont la partie phényle porte éventuellement un ou plusieurs substituants alkyle en C₁₋₄, un groupe cyclohexyloxycarbonylamino, alcanoylamino en C₂₋₄ benzoylamino dont le noyau phényle est éventuellement halogéné, 1-azacycloheptane-N-sulfonyle ou -SO₂N(R₇)(R₈) où R₇ représente un groupe alkyle en C₁₋₈ ou un groupe phényle ou cyclohexyle portant éventuellement un ou plusieurs substituants alkyle en C₁₋₄, et R₈ représente un atome d'hydrogène ou un groupe alkyle en Cₗ₋₈, R₅ représente un atome d'hydrogène ou d'halogène, un groupe alkyle en d'haloalcanoylamino en C₂₋₄ et R₆ représente un atome d'hydrogène ou d'halogène; 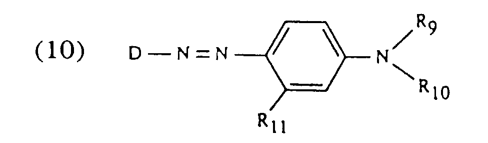 dans laquelle D représente un groupe phényle, thiophényle ou benzothiazolyle éventuellement substitués, R₉ représente un groupe alkyle en C₁₋₈, R₁₀ un groupe alkyle en C₁₋₈ éventuellement substitué et R₁₁ un atome d'hydrogène ou un groupe alkyle en C₁₋₄, et 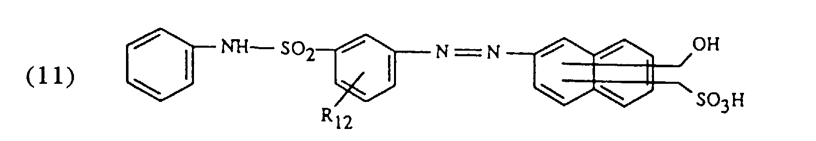 dans laquelle R₁₂ représente un groupe alkyle en C₁₋₄, en conjonction avec au moins un colorant bleu de formule 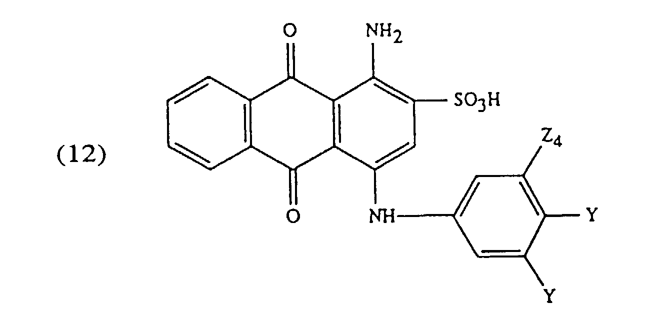 dans laquelle un des Y représente un atome d'hydrogène ou un groupe méthyle et l'autre Y représente un groupe alcanoylamino en C₂₋₄ ou hydroxy-(alkyle en C₂₋₄)-sulfamoyle et Z₄ représente un atome d'hydrogène ou un groupe méthyle.

12. Procédé conforme à une des revendications 10 et 11 pour la teinture ou l'impression en trichromie, caractérisé en ce que l'on utilise au moins un des colorants rouges de formule 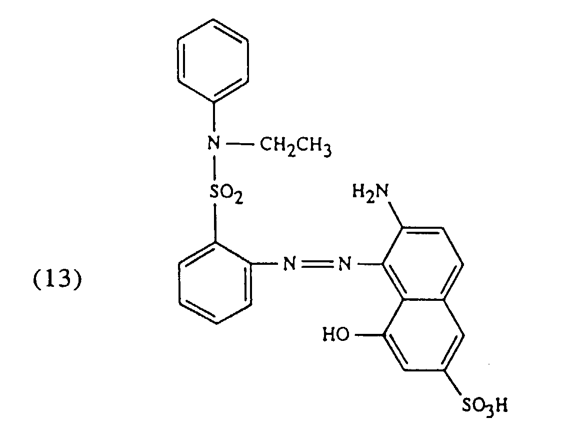 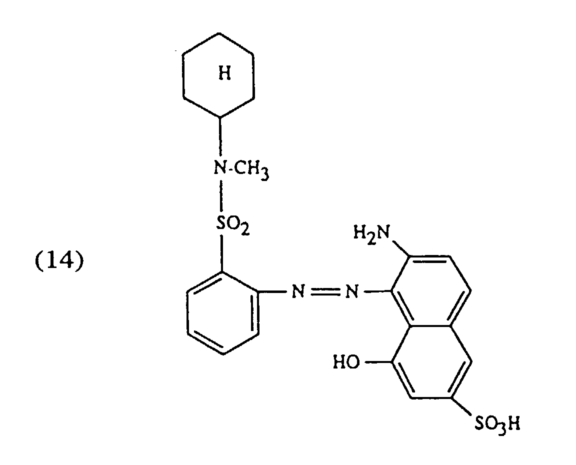 et 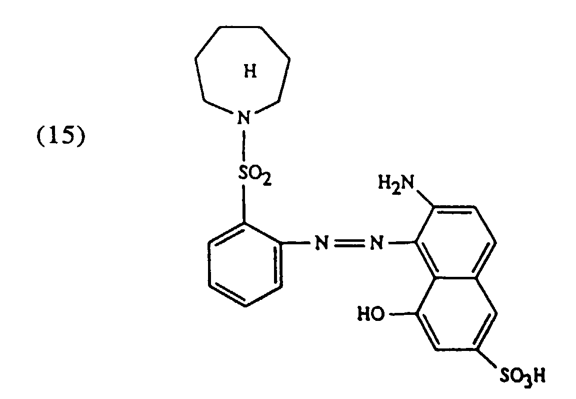 avec au moins un des colorants bleus de formule 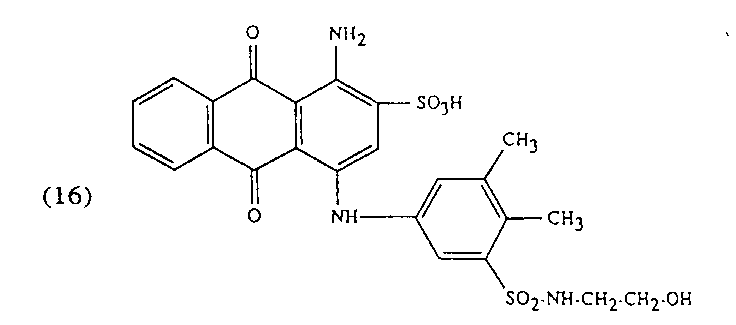 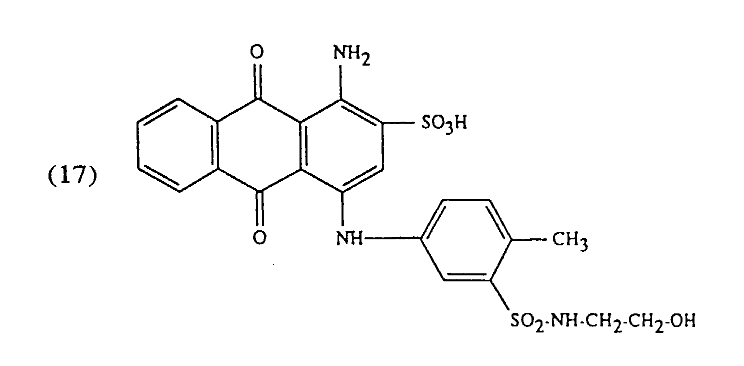 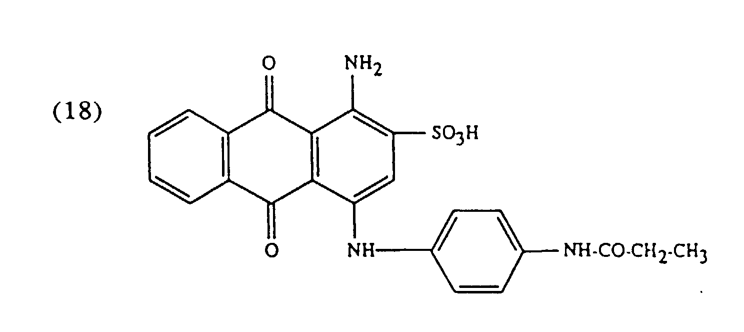 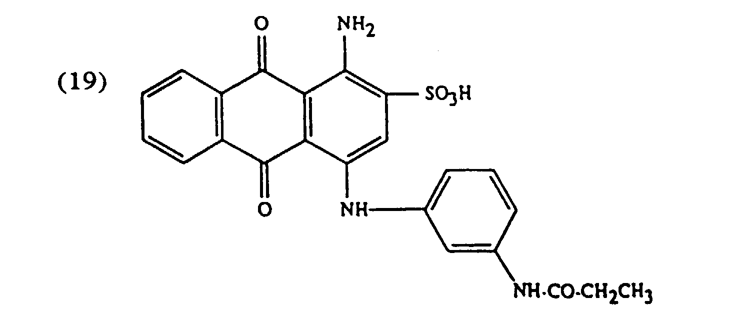 et

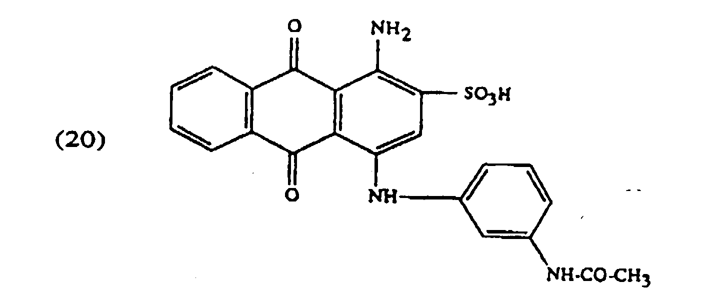

13. Utilisation des colorants azoïques selon l'une des revendications 1 à 8 ou des colorants azoïques obtenus selon la revendication 9 pour la teinture ou l'impression de matériaux fibreux en polyamide naturel ou synthétique.

14. Matériau fibreux en polyamide teint ou imprimé selon le procédé conforme à la revendication 10, en particulier des tapis en polyamide.

## Revendications (Revendications pour l'(les) Etat(s) contractant(s) suivant(s): ES)

1. Procédé de préparation de colorants azoïques de formule 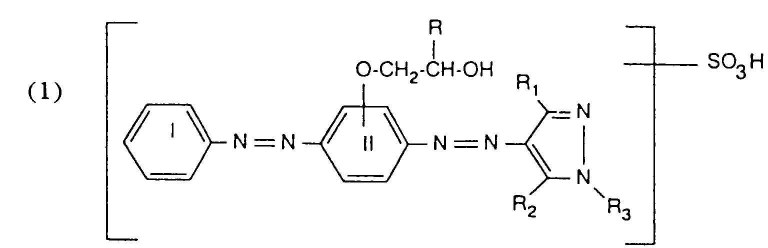 dans laquelle R, R₁ et R₂ représentent, indépendamment l'un de l'autre, un atome d'hydrogène, un résidu alkyle en C₁₋₈ ou phényle éventuellement substitués, R₃ représente un atome d'hydrogène ou un résidu alkyle en C₁₋ ₈, cycloalkyle en C₅₋₇ ou phényle éventuellement substitués et les noyaux benzéniques I et II peuvent porter d'autres substituants,
caractérisé par le fait que l'on procède à la diazotation d'une amine de formule 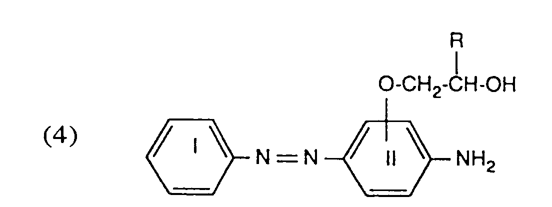 dans laquelle R a la signification indiquée dans la revendication 1 et dans laquelle les noyaux benzéniques I et II sont éventuellement substitués, que l'on copule l'amine diazotée avec un copulant de formule 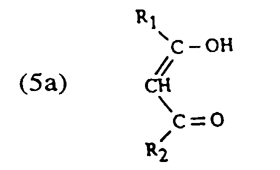 dans laquelle R₁ et R₂ représentent indépendamment l'un de l'autre un groupe alkyle en C₁₋₈ ou phényle éventuellement substitués, ou avec un copulant de formule 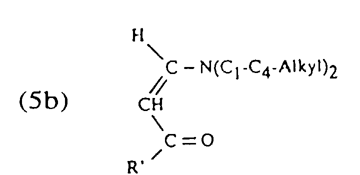 dans laquelle R' a la signification indiquée pour R₁ et R₂ à propos de la formule (1), et que l'on fait réagir le produit réactionnel de formule 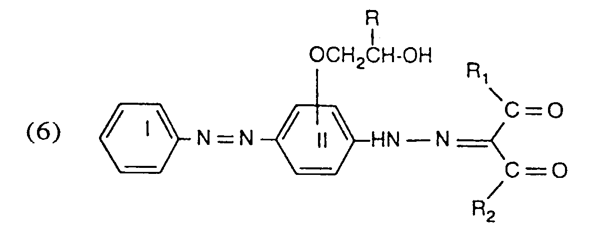 avec une hydrazine de formule
(7) H₂N-NH-R₃
dans laquelle R₃ a la signification indiquée ci-dessus pour la formule (1), l'amine de formule (4), le copulant de formule (5a) ou (5b) et l'hydrazine de formule (7) contenant ensemble au moins un groupe sulfo.

2. Procédé selon la revendication 1, caractérisé en ce que R représente un atome d'hydrogène ou un groupe alkyle en C₁₋₄ éventuellement hydroxylé, en particulier un groupe méthyle ou éthyle.

3. Procédé selon l'une quelconque des revendications 1 et 2, caractérisé en ce que R₁ et R₂ représentent, indépendamment l'un de l'autre, un atome d'hydrogène ou un groupe phényle ou alkyle en C₁₋₄, en particulier un groupe méthyle ou éthyle.

4. Procédé selon l'une quelconque des revendications 1 à 3, caractérisé en ce que R₃ représente un atome d'hydrogène, un groupe alkyle en C₁₋₄ ou phényle.

5. Procédé selon l'une quelconque des revendications 1 à 4, caractérisé en ce que les noyaux benzéniques I et II peuvent porter indépendamment un ou plusieurs substituants alkyle en C₁₋₄ alcoxy en C₁₋₄, alcanoylamino en C₂₋₄ ou halogéno.

6. Procédé selon l'une quelconque des revendications 1 à 5, caractérisé en ce que le groupe sulfo est porté par le noyau benzénique I.

7. Procédé selon l'une quelconque des revendications 1 à 6, caractérisés en ce que R représente un atome d'hydrogène ou un groupe alkyle en C₁₋₄ éventuellement hydroxylé, R₁ et R₂ représentent, indépendamment l'un de l'autre, un atome d'hydrogène ou un groupe alkyle en C₁₋₄, R₃ représente un atome d'hydrogène, un groupe alkyle en C₁₋₄ ou phényle, les noyaux benzéniques I et II peuvent porter, indépendamment l'un de l'autre, un ou plusieurs substituants alkyle en C₁₋₄, alcoxy en C₁₋₄, alcanoylamino en C₂₋₄ ou halogéno et le groupe sulfo est porté par le noyau benzénique I.

8. Procédé selon la revendication 1 pour la préparation de colorants azoïques de formule 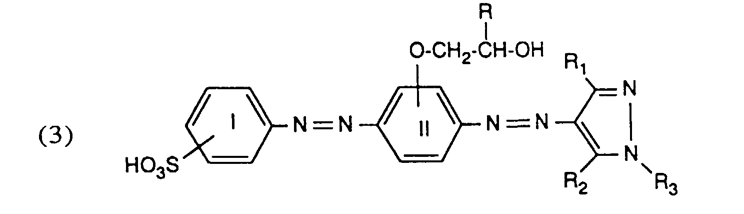 dans laquelle R représente un groupe méthyle ou éthyle, R₁ et R₂ représentent, indépendamment l'un de l'autre, un groupe méthyle ou éthyle, R₃ représente un atome d'hydrogène, un groupe méthyle, éthyle ou phényle et les noyaux benzéniques I et II peuvent porter, indépendamment l'un de l'autre, un ou plusieurs substituants méthyle, méthoxy, acétylamino ou chloro.

9. Colorants azoïques de formule 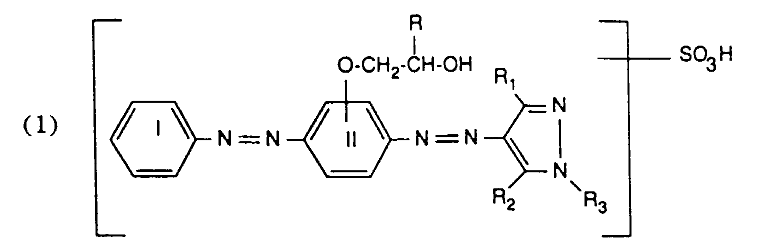 dans laquelle R, R₁ et R₂ représentent, indépendamment l'un de l'autre, un groupe alkyle en C₁₋₈ ou phényle éventuellement substitués, R₃ représente un atome d'hydrogène ou un groupe alkyle en C₁₋₈, cycloalkyle en C₅₋₇ ou phényle éventuellement substitués et les noyaux benzéniques I et II peuvent porter d'autres substituants.

10. Procédé de teinture ou d'impression en trichromie de matériaux fibreux en polyamide synthétique et naturel avec des mélanges de colorants, caractérisé en ce que l'on utilise au moins un colorant jaune ou orange de formule 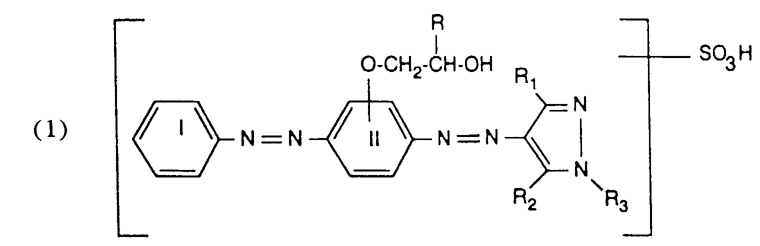 dans laquelle R, R₁ et R₂ représentent, indépendamment l'un de l'autre, un atome d'hydrogène, un groupe alkyle en C₁₋₈ ou phényle éventuellement substitué, R₃ représente un atome d'hydrogène ou un groupe alkyle en C₁₋₈, cycloalkyle en C₅₋₇ ou phényle éventuellement substitués et les noyaux benzéniques I et II peuvent porter d'autres substituants, en conjonction avec au moins un colorant rouge et au moins un colorant bleu.

11. Procédé conforme à la revendication 10 pour la teinture ou l'impression en trichromie, caractérisé en ce que l'on utilise au moins un des colorants rouges de formule (9), (10) et (11) : 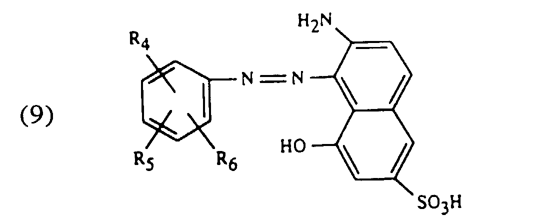 dans laquelle R₄ représente un groupe alkyle en C₁₋₈ éventuellement substitué, un atome d'halogène, un groupe phénylsulfonyle ou phénoxysulfonyle dont la partie phényle porte éventuellement un ou plusieurs substituants alkyle en C₁₋₄, un groupe cyclohexyloxycarbonylamino, alcanoylamino en C₂₋₄, benzoylamino dont le noyau phényle est éventuellement halogéné, 1-azacycloheptane-N-sulfonyle ou -SO₂N(R₇)(R₈) où R₇ représente un groupe alkyle en C₁₋₈ ou un groupe phényle ou cyclohexyle portant éventuellement un ou plusieurs substituants alkyle en C₁₋₄, et R₈ représente un atome d'hydrogène ou un groupe alkyle en C₁₋₈, R₅ représente un atome d'hydrogène ou d'halogène, un groupe alkyle en C₁₋₈ ou alcanoylamino en C₂₋₄ et R₆ représente un atome d'hydrogène ou d'halogène; 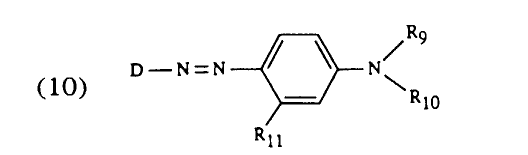 dans laquelle D représente un groupe phényle, thiophényle ou benzothiazolyle éventuellement substitués, R₉ représente un groupe alkyle en C₁₋₈, R₁₀ un groupe alkyle en C₁₋₈ éventuellement substitué et R₁₁ un atome d'hydrogène ou un groupe alkyle en C₁₋₄, et 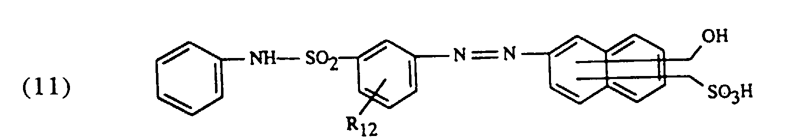 dans laquelle R₁₂ représente un groupe alkyle en C₁₋₄, en conjonction avec au moins un colorant bleu de formule 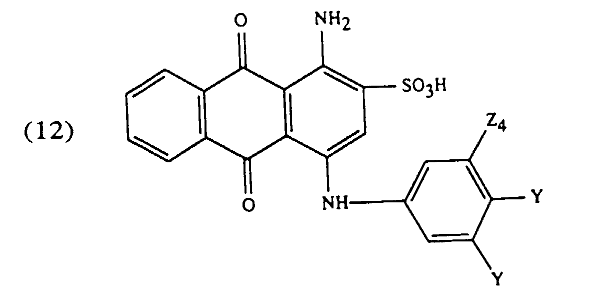 dans laquelle un des Y représente un atome d'hydrogène ou un groupe méthyle et l'autre Y représente un groupe alcanoylamino en C₂₋₄ ou hydroxy-(alkyle en C₂₋₄)-sulfamoyle et Z₄ représente un atome d'hydrogène ou un groupe méthyle.

12. Procédé conforme à une des revendications 10 et 11 pour la teinture ou l'impression en trichromie, caractérisé en ce que l'on utilise au moins un des colorants rouges de formule 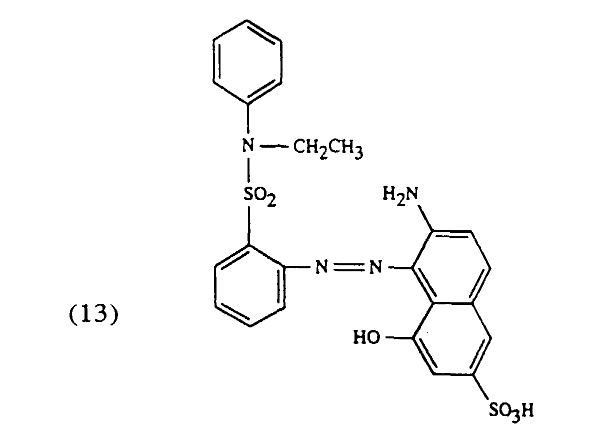 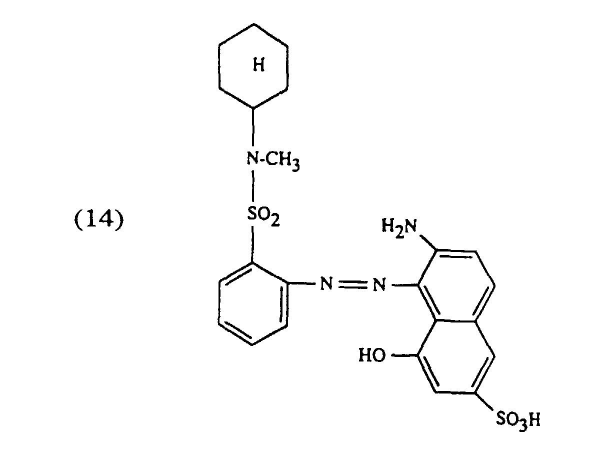 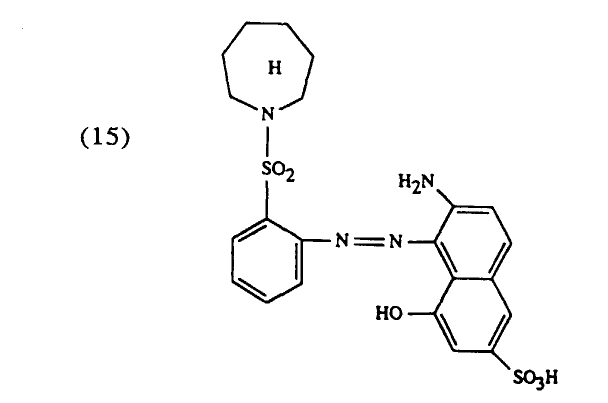 avec au moins un des colorants bleus de formule 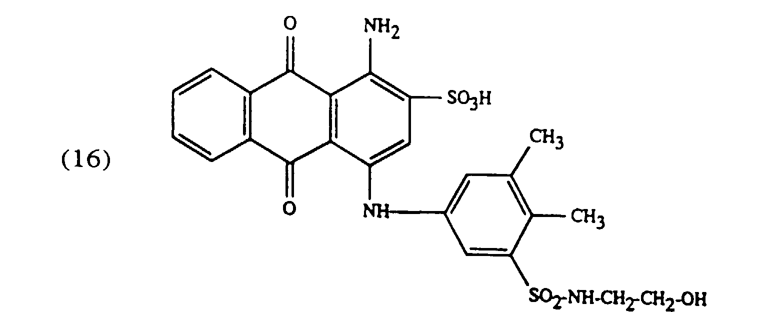 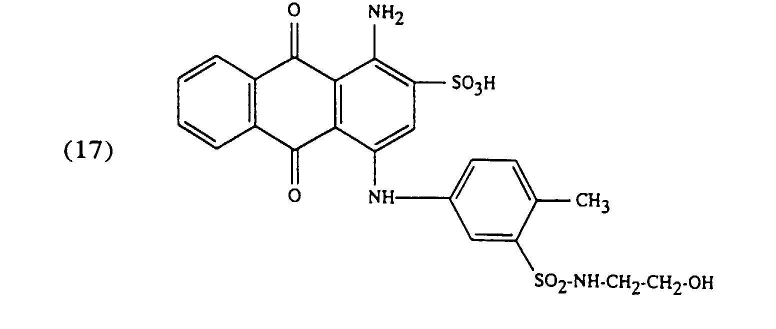 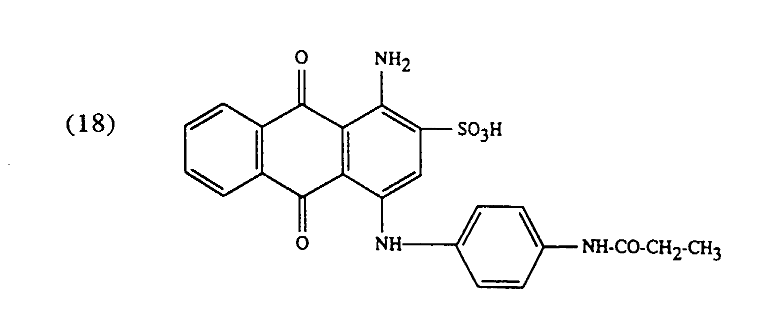 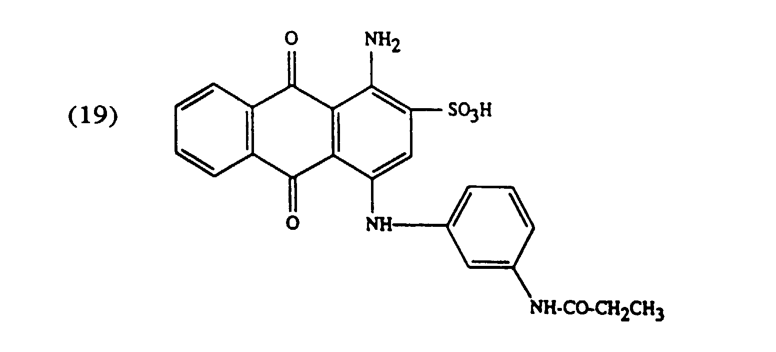 et

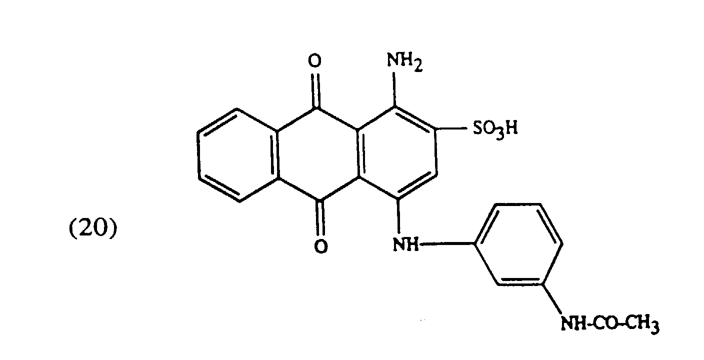

13. Utilisation des colorants azoïques obtenus selon l'une quelconque des revendications 1 à 8 ou des colorants azoïques selon la revendication 9 pour la teinture ou l'impression de matériaux fibreux en polyamide naturel ou synthétique.

14. Matériau fibreux en polyamide teint ou imprimé selon le procédé conforme à la revendication 10, en particulier des tapis en polyamide.
